(19) Europäisches Patentamt
European Patent Office
Office européen des brevets

(11) EP 4 105 271 B1

(12) EUROPÄISCHE PATENTSCHRIFT

(45) Veröffentlichungstag und Bekanntmachung des Hinweises auf die Patenterteilung:
**20.05.2026 Patentblatt 2026/21**

(21) Anmeldenummer: **22173957.6**

(22) Anmeldetag: **18.05.2022**

(51) Internationale Patentklassifikation (IPC):
***C08K 3/22*** *(2006.01)* ***C08L 77/02*** *(2006.01)*

(52) Gemeinsame Patentklassifikation (CPC):
(C-Sets verfügbar)
**C08K 3/22; C08L 77/02;** C08K 3/016;
C08K 2003/2224; C08K 2003/2227;
C08K 2201/001; Y02T 10/70; Y02T 10/7072;
Y02T 90/14 (Forts.)

(54) **POLYAMIDZUSAMMENSETZUNGEN**

POLYAMIDE COMPOSITIONS

COMPOSITIONS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2021 EP 21179448**

(43) Veröffentlichungstag der Anmeldung:
**21.12.2022 Patentblatt 2022/51**

(73) Patentinhaber: **Envalior Deutschland GmbH
40474 Düsseldorf (DE)**

(72) Erfinder:
- **ENDTNER, Jochen
40474 DÜSSELDORF (DE)**
- **BIENMÜLLER, Matthias
40474 DÜSSELDORF (DE)**

(74) Vertreter: **Envalior Association
Urmonderbaan 22
6167 RD Geleen (NL)**

(56) Entgegenhaltungen:
**US-A1- 2015 232 664**

- **DATABASE WPI Week 201557, Derwent World Patents Index; AN 2015-40348A, XP002804819**
- **DATABASE WPI Week 202007, Derwent World Patents Index; AN 2020-78680K, XP002804820**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 77/02, C08K 3/22, C08L 63/00**

## Beschreibung

Die vorliegende Erfindung betrifft flammwidrig ausgerüstete Polyamid basierte Zusammensetzungen oder Formmassen sowie daraus herzustellende Erzeugnisse der Elektro- oder Elektronikindustrie, insbesondere Ladekomponenten, enthaltend wenigstens ein Polyamid, Aluminiumoxid, Magnesiumhydroxid sowie wenigstens ein organisches Epoxid.

Stromdurchflossene elektrische Bauteile, insbesondere Ladekomponenten zum Aufladen elektrischer Batterien, insbesondere zur Anwendung in der Elektromobilität, erzeugen Wärme, wenn Strom durch die Anschlüsse und Kabel der Ladekomponenten fließt. Typische Ladekomponenten sind Ladekabelstecker und Ladeaufnahmeanordnung (Charging Inlet) wie sie in Fig. 1 der DE 10 2012 002 882 B4 abgebildet sind. Um die Entwicklungen in der Elektromobilität zu fördern, wurde versucht, die Verbindungen von Ladekomponenten, insbesondere die Schnittstelle zwischen der Aufnahmeanordnung und dem Ladekabelstecker, in der ganzen Elektrofahrzeugindustrie zu standardisieren. Zum Beispiel hat die Society of Automotive Engineers ("SAE") solch eine Schnittstelle in SAE J1772 spezifiziert; siehe: **https:/lde.wikipedia.org/wiki/SAE_J1772.**

Die Ausführungen in **https://de.wikipedia.org/wiki/SAE_J1772** zeigen, dass es wünschenswert ist, den Strom zu erhöhen, der über die Anschlüsse zum Laden insbesondere einer Kraftfahrzeugbatterie übertragen wird. Bei höheren Strömen sind die Anschlüsse und die Stromkabel jedoch einem Temperaturanstieg ausgesetzt, der die Komponenten der Ladeaufnahmeanordnung im Kraftfahrzeug beschädigen kann. Beispielsweise kann eine Ladeaufnahmeanordnung (Charging Inlet) für ein Batteriesystem eines Elektrofahrzeugs (EV) oder eines hybridelektrischen Fahrzeugs (HEV) während eines Ladevorgangs Wärme durch die Anschlüsse und die Kabel der Ladeaufnahmeanordnung erzeugen.

DE 10 2020 108 175 A1 löst das Problem mit der beim Laden an der Ladeinfrastruktur für eine Kraftfahrzeugbatterie auftretenden Wärme mittels Kabelwärmetauscher, der einen Kühlmittelkanal für eine Kühlmittelströmung durch den Kabelwärmetauscher zum aktiven Kühlen des Leiters des Stromkabels aufweist.

Die Lösung der EP 3 470 254 B1 besteht in einer digitalen Vorrichtung zum Verhindern einer Überhitzung einer als Ladeeinlass bezeichneten Ladeaufnahmeanordnung, wobei die Ladezeit gemessen und die Temperatur des Ladeeinlasses geschätzt wird, um die Temperatur des Ladeeinlasses basierend auf Ladezeiten und Ladeströmen für jeweilige Ladespannungen festzulegen und um zu verhindern, dass die Temperatur des Ladeeinlasses eine bestimmte Schwellentemperatur überschreitet.

Alternativ werden elektrisch isolierende, wärmeleitfähige Kunststoffe diskutiert, um die Wärme stromdurchflossener Leiter effektiver ableiten zu können. Problematisch ist dabei allerdings die in vielen Anwendungen gewünschte Flammwidrigkeit, so dass gerade für den Bereich der Batterie- und Ladeinfrastruktur in der Elektromobilität häufig eine V-0 Klassifizierung im UL94 Test gefordert wird. Der enge Bauraum und der Wunsch, die Wärmeübertragungsstrecke durch den elektrisch isolierenden Kunststoff hindurch an ein außenliegendes Wärmeableitungsmedium möglichst kurz zu konstruieren, führen zwangsläufig zu der Anforderung, dass eine UL94 V-0 Klassifizierung bereits bei sehr dünnen Wandstärken, mindestens aber bei 0,75mm erreicht werden soll. Die sich daraus ergebende Herausforderung besteht nun darin, einen inhärent wärmeisolierenden Kunststoff derartig mit elektrisch isolierenden wärmeleitfähigen Additiven und Flammschutzmitteln auszurüsten, dass neben einer isotropen Wärmeleitfähigkeit von mindestens 1W/mK dennoch eine V-0 Klassifizierung bei Wandstärken $\leq$ 0,75mm und des Weiteren auch eine der Anwendung gerecht werdende mechanische Belastbarkeit gewährleistet ist.

EP 3 133 104 A1 versucht dieses Problem durch eine Polyamidformmasse, enthaltend Magnesiumhydroxid und Bornitrid zu lösen. Zwar wird dabei eine Brandklassifizierung von UL94 V-0 auch bei 0,75mm erreicht und auch eine Wärmeleitfähigkeit > 1W/mK, allerdings zu Lasten einer für viele Anwendungen unzureichenden Mechanik, insbesondere in der Biegefestigkeit und Randfaserdehnung. Ferner wird in EP 3 133 104 A1 Bornitrid eingesetzt, das zum einen aufgrund seiner anisotropen Wärmeleitfähigkeit einen erhöhten Design-Aufwand vom Konstrukteur verlangt und zum anderen aufgrund seiner aufwändigen und energieintensiven Herstellungsweise auch ökologisch kritisch zu bewerten ist.

Aus CN 104559147 A ist eine flammwidrig ausgerüstete Polyamid basierte Zusammensetzung enthaltend ein Polyamid, Aluminiumoxid, Magnesiumoxid sowie ein organisches Epoxid bekannt. In den Beispielen der CN 104559147 A wird u.a. Glycidyloxypropyltrimethoxysilan eingesetzt.

Aus CN 111518367 A ist ein hocheffizienter, wärmeleitfähiger Film zur Verwendung in der Elektronikindustrie bekannt, enthaltend ein Epoxid, einen Schlagzähmodifikator, Aluminiumoxid, Magnesiumhydroxid, Polyamid, Bornitrid, Silikonkautschuk, Pigmente sowie ein Vulkanisationsmittel. Als Schlagzähmodifikator kann Polypropylenglycoldiglycidylether eingesetzt werden.

Schließlich sei noch auf WO 2014 / 036720 A1 verwiesen, worin wärmeleitfähige Polymerzusammensetzungen, umfassend

(a) etwa 20 Gew.-% bis etwa 60 Gew.-% eines organischen Polymers, ausgewählt aus Polyamid, Polyester und Polyolefin;

(b) etwa 30 Gew.-% bis etwa 70 Gew.-% eines wärmeleitenden Additivs, ausgewählt aus Magnesiumhydroxid oder Aluminiumoxidhydroxid; und

(c) etwa 1 Gew.-% bis etwa 10 Gew.-% eines Polyarylensulfids beansprucht werden, wobei sich alle Gewichtsprozentwerte auf das Gesamtgewicht der Polymerzusammensetzung beziehen und diese eine größere Flammhemmung aufweist, als eine ansonsten identische Polymerzusammensetzung ohne das Polyarylensulfid.

Ausgehend vom Stand der Technik bestand die Aufgabe der vorliegenden Erfindung daher darin, möglichst ohne die Verwendung von Bornitrid, eine elektrisch isolierende, wärmeleitfähige Polyamid basierte Zusammensetzung bzw. Formmasse bereit zu stellen, die eine UL94 V-0 Brandklassifizierung bei Wandstärken $\leq$ 0,75mm ermöglicht, dabei eine möglichst isotrope Wärmeleitfähigkeit von mindestens 1W/mK erreicht und dennoch gute mechanische Kennwerte erzielt werden.

Unter einer möglichst isotropen Wärmeleitfähigkeit wird insbesondere verstanden, dass das Verhältnis der Wärmeleitfähigkeit senkrecht zur Fließrichtung ("through plane") zur Wärmeleitfähigkeit in Fließrichtung ("in plane") im Bereich von 0,65 bis 1,5 liegt.

Unter guten mechanischen Kennwerten wird eine Randfaserdehnung von mindestens 1,5% und eine Biegefestigkeit von mindestens 150MPa im Biegeversuch gemäß ISO178-A sowie eine Schlagzähigkeit von mindestens 20kJ/$m^2$ gemäß ISO180-1U verstanden.

Die Lösung der Aufgabe und Gegenstand der vorliegenden Erfindung sind Zusammensetzungen oder Formmassen enthaltend

wenigstens ein Polyamid, vorzugsweise semikristalline Polyamide,

Aluminiumoxid,

Magnesiumhydroxid und

wenigstens eine organische, halogenfreie, epoxidierte Verbindung, vorzugsweise mit mindestens zwei Epoxidgruppen pro Molekül,

wobei

es sich bei dem Epoxid um ein oligomeres Reaktionsprodukt aus Bisphenol A mit Epichlorhydrin mit einem Epoxy Index nach ISO 3001 im Bereich von 450 bis 750 Gramm pro Äquivalent handelt,

oder wobei

es sich bei dem Epoxid um organische, halogenfreie Epoxid-Verbindungen mit mindestens 2 Epoxid-Funktionen handelt in denen in beliebiger Kombination und Häufigkeit neben dieser nachfolgend gezeigten Epoxid-enthaltenden Einheit

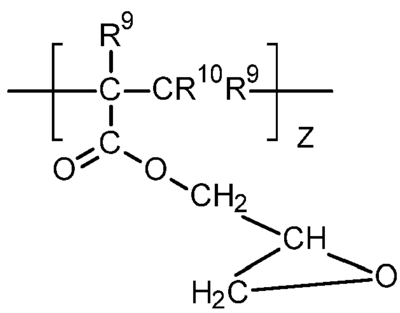

auch diese nachfolgend gezeigte Einheit

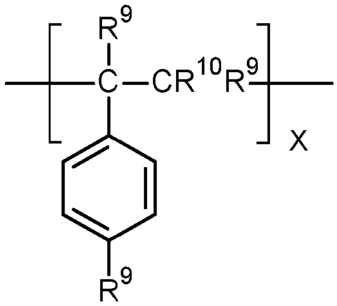

und/oder diese nachfolgend gezeigte Einheit

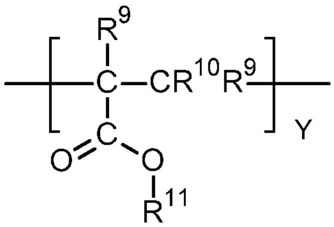

enthalten sind und worin

$R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_{1-}C_8$-Alkyl steht,

wobei die mit X, Y, Z- gekennzeichneten Einheiten wiederholt und in beliebiger Reihenfolge auftreten können,

oder wobei

es sich bei dem Epoxid um eine Verbindung der Formel (II) handelt

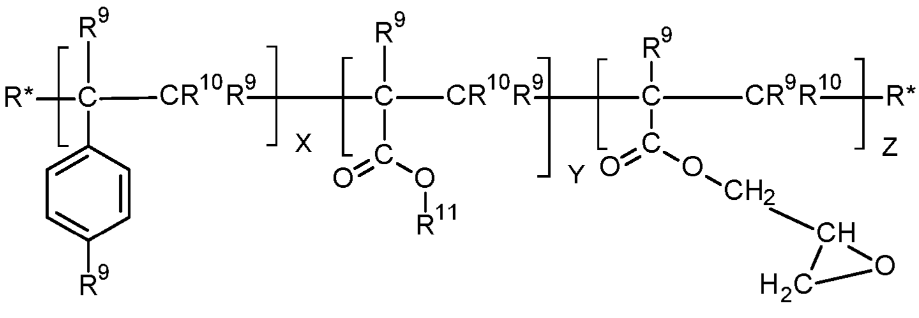

(II)

worin $R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_{1-}C_8$-Alkyl steht, wobei die mit X, Y, Z- gekennzeichneten Einheiten wiederholt und in beliebiger Reihenfolge auftreten können,

oder wobei

es sich bei dem Epoxid um ein oligomeres Reaktionsprodukt aus Bisphenol A mit Epichlorhydrin

der Formel (III),

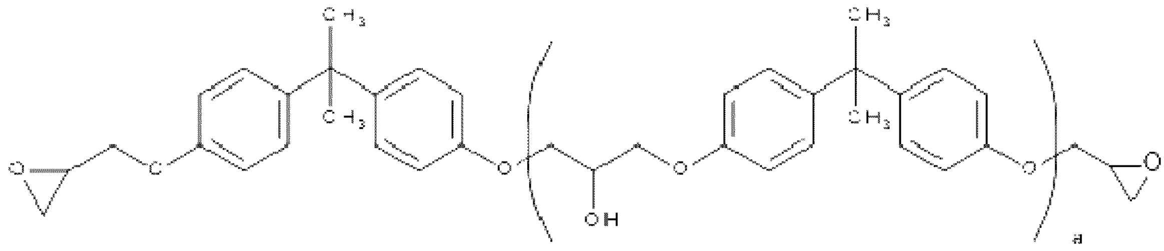

(III)

handelt,

worin a für eine ganze Zahl im Bereich von 0 bis 12 steht, wobei a für die durchschnittliche Anzahl an Wiederholungseinheiten steht.

Gegenstand der vorliegenden Erfindung sind aber auch Erzeugnisse der Elektro- oder Elektronikindustrie, vorzugsweise Ladekomponenten, besonders bevorzugt Batterieladekomponenten zum Aufladen elektrischer Batterien, insbesondere bevorzugt Batterieladekomponenten zum Aufladen elektrischer Batterien für die Elektromobilität, basierend auf Zusammensetzungen enthaltend

wenigstens ein Polyamid, vorzugsweise semikristalline Polyamide,

Aluminiumoxid,

Magnesiumhydroxid und

wenigstens eine organische, halogenfreie, epoxidierte Verbindung, vorzugsweise mit mindestens zwei Epoxidgruppen pro Molekül,

wobei

es sich bei dem Epoxid um ein oligomeres Reaktionsprodukt aus Bisphenol A mit Epichlorhydrin mit einem Epoxy Index nach ISO 3001 im Bereich von 450 bis 750 Gramm pro Äquivalent handelt,

oder wobei

es sich bei dem Epoxid um organische, halogenfreie Epoxid-Verbindungen mit mindestens 2 Epoxid-Funktionen

handelt in denen in beliebiger Kombination und Häufigkeit neben dieser nachfolgend gezeigten Epoxid-enthaltenden Einheit

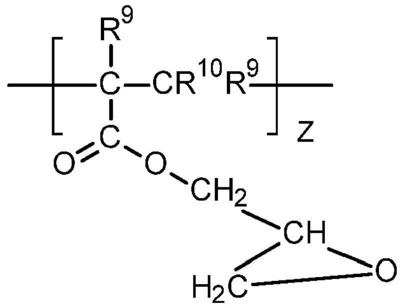

auch diese nachfolgend gezeigte Einheit

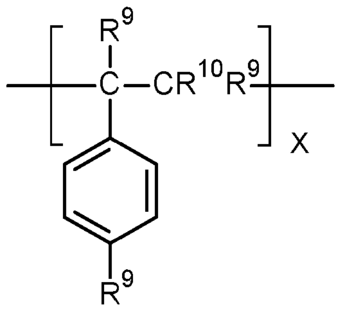

und/oder diese nachfolgend gezeigte Einheit

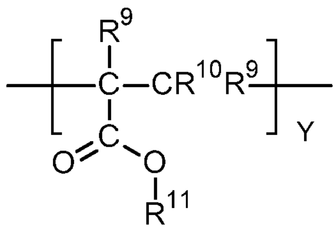

enthalten sind und worin

$R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_{1-}C_8$-Alkyl steht,

wobei die mit X, Y, Z- gekennzeichneten Einheiten wiederholt und in beliebiger Reihenfolge auftreten können,

oder wobei

es sich bei dem Epoxid um eine Verbindung der Formel (II) handelt

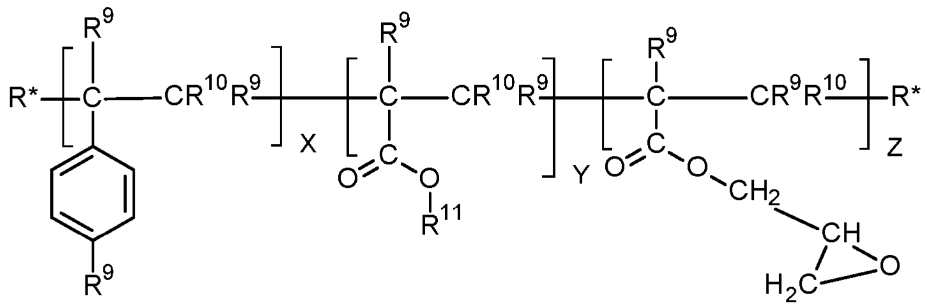

(II)

worin $R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_{1-}C_8$-Alkyl steht, wobei die mit X, Y, Z- gekennzeichneten Einheiten wiederholt und in beliebiger Reihenfolge auftreten können,

oder wobei

es sich bei dem Epoxid um ein oligomeres Reaktionsprodukt aus Bisphenol A mit Epichlorhydrin

der Formel (III),

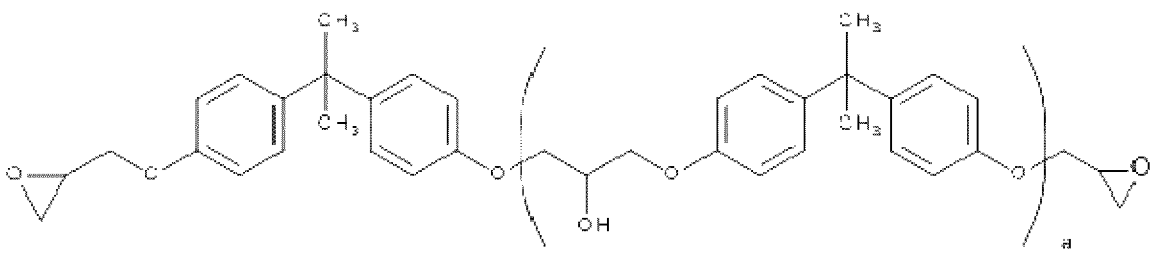

(III)

handelt,

worin a tür eine ganze Zahl im Bereich von 0 bis 12 steht, wobei a für die durchschnittliche Anzahl an Wiederholungseinheiten steht.

Die Erfindung betrifft aber auch ein Verfahren zur Herstellung von Erzeugnissen der Elektro- oder Elektronikindustrie, vorzugsweise zur Herstellung von Ladekomponenten, besonders bevorzugt zur Herstellung von Batterieladekomponenten zum Aufladen elektrischer Batterien, insbesondere zur Herstellung von Batterien für die Elektromobilität, indem man Zusammensetzungen enthaltend

a) wenigstens ein Polyamid, vorzugsweise semikristalline Polyamide,

b) Aluminiumoxid,

c) Magnesiumhydroxid und

d) wenigstens eine organische, halogenfreie, epoxidierte Verbindung, vorzugsweise mit mindestens zwei Epoxidgruppen pro Molekül,

wobei

es sich bei dem Epoxid um ein oligomeres Reaktionsprodukt aus Bisphenol A mit Epichlorhydrin mit einem Epoxy Index nach ISO 3001 im Bereich von 450 bis 750 Gramm pro Äquivalent handelt,

oder wobei

es sich bei dem Epoxid um organische, halogenfreie Epoxid-Verbindungen mit mindestens 2 Epoxid-Funktionen handelt in denen in beliebiger Kombination und Häufigkeit neben dieser nachfolgend gezeigten Epoxid-enthaltenden Einheit

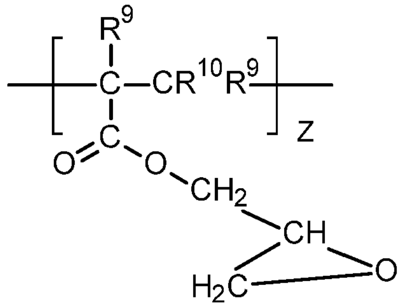

auch diese nachfolgend gezeigte Einheit

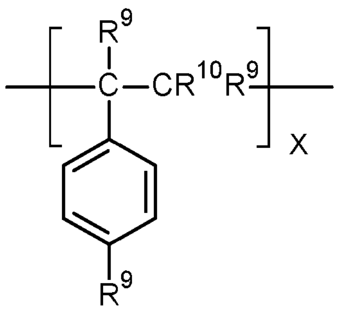

und/oder diese nachfolgend gezeigte Einheit

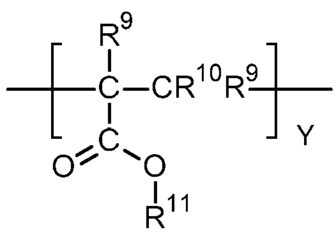

enthalten sind und worin

$R^9$, $R^{10}$ unabhängig voneinander für H oder $C_1$-$C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_{1-}C_8$-Alkyl steht,

wobei die mit X, Y, Z- gekennzeichneten Einheiten wiederholt und in beliebiger Reihenfolge auftreten können,

oder wobei

es sich bei dem Epoxid um eine Verbindung der Formel (II) handelt

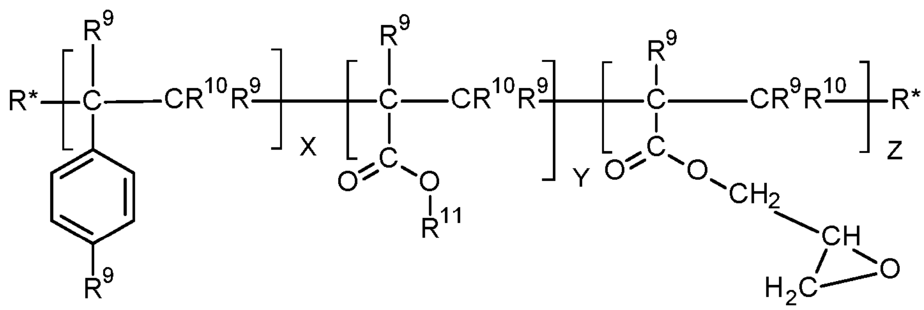

(II)

worin $R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_1$-$C_8$-Alkyl steht, wobei die mit X, Y, Z- gekennzeichneten Einheiten wiederholt und in beliebiger Reihenfolge auftreten können,

oder wobei

es sich bei dem Epoxid um ein oligomeres Reaktionsprodukt aus Bisphenol A mit Epichlorhydrin

der Formel (III),

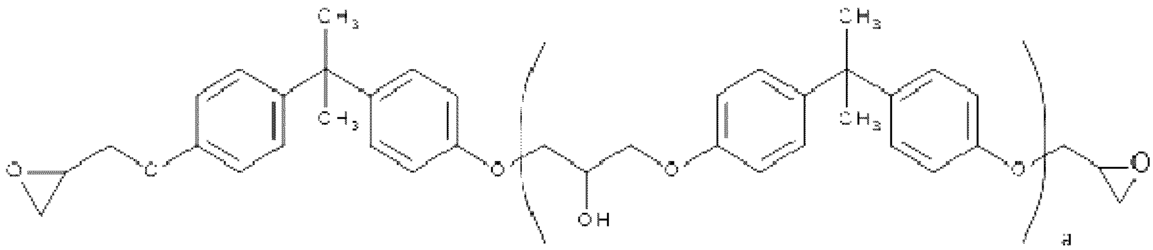

(III)

handelt,

worin a für eine ganze Zahl im Bereich von 0 bis 12 steht, wobei a für die durchschnittliche Anzahl an Wiederholungseinheiten steht,

durch Mischen zu Formmassen verarbeitet, als Strang in einem Wasserbad austrägt, bis zur Granulierfähigkeit abkühlt und granuliert und im Spritzgussverfahren einsetzt. Alternativ kann auch direkt nach dem Mischen der Komponenten a) bis d) die Formmasse dem Spritzguss zugeführt werden.

Die Zubereitung der erfindungsgemäß einzusetzenden Zusammensetzungen für die Verarbeitung im Spritzguss erfolgt zunächst durch Mischen der als Edukte einzusetzenden Komponenten a), b), c) und d) sowie gegebenenfalls weiterer Komponenten in wenigstens einem Mischwerkzeug. Vorzugsweise erfolgt dabei die Verarbeitung der einzusetzenden Komponenten zu einer Formmasse durch Kneten, Compoundieren, Extrudieren oder Walzen. Bevorzugt erfolgt diese Verarbeitung bei einer Temperatur im Bereich von 230 bis 330°C. Insbesondere bevorzugt erfolgt die Verarbeitung zur Formmasse durch Compoundieren auf einem gleichläufigen Zweiwellenextruder oder Buss-Kneter. Es kann vorteilhaft sein, einzelne Komponenten vorzumischen. Als Zwischenprodukte erhält man auf den erfindungsgemäßen Zusammensetzungen basierende Formmassen. Diese Formmassen können entweder ausschließlich aus den Komponenten a) bis d) bestehen, oder aber zusätzlich zu den Komponenten a) bis d) noch weitere Komponenten enthalten. Die ebenfalls erfindungsgemäßen Formmassen, vorzugsweise hergestellt in einem Zweiwellenextruder des Typs ZSK 26 Compounder der Firma Coperion Werner & Pfleiderer (Stuttgart, Deutschland) bei einer Temperatur von ca. 290°C, werden als Strang in einem Wasserbad ausgetragen, bis zur Granulierfähigkeit abgekühlt und granuliert. Das Granulat wird anschließend im Vakuumtrockenschrank bis zur Gewichtskonstanz getrocknet, vorzugsweise bei Temperaturen im Bereich von 70 +/- 10 °C, bevor es einer Spritzgießmaschine zugeführt wird. Das Verfahren des Spritzgießens ist dem Fachmann bekannt; siehe beispielsweise **https://www.maschinenbau-wissen.de/skript3/werkstofftechnik/kunststoffe/389-spritzgiessen-prozess**

Vorzugsweise wird in den erfindungsgemäßen Zusammensetzungen auf 100 Massenanteile der Komponente a) die Komponente b) in Mengen im Bereich von 20 bis 300 Massenteilen, bevorzugt im Bereich von 35 bis 250 Massenteilen, besonders bevorzugt im Bereich von 50 bis 180 Massenteilen und ganz besonders bevorzugt im Bereich von 70 bis 120 Massenteilen eingesetzt.

Vorzugsweise wird in den erfindungsgemäßen Zusammensetzungen auf 100 Massenanteile der Komponente a) die Komponente c) in Mengen im Bereich von 20 bis 350 Massenteilen, bevorzugt im Bereich von 50 bis 300 Massenteilen, besonders bevorzugt im Bereich von 85 bis 250 Massenteile und ganz besonders bevorzugt im Bereich von 120 bis 210 Massenteilen eingesetzt.

Vorzugsweise wird in den erfindungsgemäßen Zusammensetzungen auf 100 Massenanteile der Komponente a) die Komponente d) in Mengen im Bereich von 0,1 bis 25 Massenteilen, bevorzugt im Bereich von 1 bis 16 Massenteilen, besonders bevorzugt im Bereich von 2 bis 10 Massenteilen eingesetzt.

Zur Klarstellung sei angemerkt, dass vom Rahmen dieser Erfindung alle aufgeführten, allgemeinen oder in Vorzugsbereichen genannten Definitionen, Mengenangaben und Parameter in beliebigen Kombinationen umfasst sind. Dies betrifft die erfindungsgemäßen Zusammensetzungen, Formmassen und Erzeugnisse sowie erfindungsgemäße Verfahren und erfindungsgemäße Verwendungen. Sofern nicht anders angegeben, gelten zitierte Normen in der zum Anmeldetag gültigen Fassung. Sofern nicht anders angegeben handelt es sich bei Prozentangaben um Gewichtsprozente.

**Komponente a)**

Erfindungsgemäß einzusetzende Polyamide sind vorzugsweise semikristalline Polyamide, die gemäß DE 10

2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks, aufweisen.

Vorzugsweise weisen als Komponente a) einzusetzende Polyamide einen Schmelzpunkt von mindestens 180°C auf. Besonders bevorzugt sind Polyamid 6 (PA 6) oder Polyamid 66 (PA 66) oder ein Co-Polyamid von PA6 oder PA66. Insbesondere ganz besonders bevorzugt wird PA 6 eingesetzt.

Die im Rahmen der vorliegenden Anmeldung benutzte Kennzeichnung der Polyamide entspricht internationaler Norm bzw. DIN 7728, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer $\alpha,\omega$- Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976**.**

Bevorzugt wird als Komponente a) ein niedrigviskoses Polyamid mit einer Viskositätszahl bestimmt in einer 0,5 gew.-%igen Lösung in 96 gew.-%iger Schwefelsäure bei 25°C gemäß ISO 307 im Bereich von 80 bis 135 ml/g, besonders bevorzugt im Bereich von 90 bis 130 ml/g, ganz besonders bevorzugt im Bereich von 90 bis 125 ml/g, insbesondere besonders bevorzugt im Bereich von 95 bis 115 ml/g eingesetzt.

In einer besonders bevorzugten Ausführungsform wird als Komponente a) ein Polyamid 6 mit einer Viskositätszahl bestimmt in einer 0,5 gew.-%igen Lösung in 96 gew.-%iger Schwefelsäure bei 25°C gemäß ISO 307 im Bereich von 95 bis 115 ml/g eingesetzt.

Die in den erfindungsgemäßen thermoplastischen Formmassen einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine sowie verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

**Komponente b)**

Vorzugsweise wird als Komponente b) $\alpha$-$Al_2O_3$, eingesetzt.

Bei dem im Rahmen der vorliegenden Erfindung vorzugsweise einzusetzendem technischen Aluminiumoxid liegt der Anteil an $\alpha$-$Al_2O_3$ bei mehr als 70%. Besonders bevorzugt handelt es sich um ein Aluminiumoxid mit einem Anteil an $\alpha$-$Al_2O_3$ von über 90%. Ganz besonders bevorzugt handelt es sich um ein Aluminiumoxid mit einem Anteil an $\alpha$-$Al_2O_3$ von über 95%. Erfindungsgemäß besonders bevorzugt ist $\alpha$-$Al_2O_3$ mit weniger als 5 Gew.-% Verunreinigungen, ganz besonders bevorzugt mit weniger als 1 Gew.-% Verunreinigungen.

Bevorzugt wird Komponente b) als Pulver eingesetzt. Bevorzugte Pulver weisen eine gemäß ISO13320 zu bestimmende volumenmittlere Partikelgröße d50 von maximal 100 $\mu$m, bevorzugt eine volumenmittlere Partikelgröße $d_{50}$ im Bereich von 0,1 bis 50 $\mu$m, besonders bevorzugt eine volumenmittlere Partikelgröße $d_{50}$ im Bereich von 0,5 bis 10 $\mu$m, ganz besonders bevorzugt eine volumenmittlere Partikelgröße $d_{50}$ im Bereich von 0,5 bis 5 $\mu$m auf.

Die nach ISO13320 zu bestimmende untere volumenmittlere Partikelgröße $d_{10}$ liegt für Komponente b) vorzugsweise im Bereich von 0.01 bis 20 $\mu$m, besonders bevorzugt im Bereich von 0.05 bis 10 $\mu$m, ganz besonders bevorzugt im Bereich von 0.1 bis 5 $\mu$m und insbesondere bevorzugt im Bereich von 0.3 bis 2$\mu$m.

Die nach ISO13320 zu bestimmende obere volumenmittlere Partikelgröße $d_{90}$ liegt für Komponente b) vorzugsweise bei maximal 200$\mu$m, besonders bevorzugt im Bereich von 1 bis 100 $\mu$m, ganz besonders bevorzugt im Bereich von 1.5 bis 50 $\mu$m, insbesondere bevorzugt im Bereich von 2 bis 10 $\mu$m.

Vorzugsweise wird als Komponente b) ein Aluminiumoxid mit einer nach ISO 13320 mittels Laserbeugung zu bestimmenden volumenmittleren Partikelgrößenverteilung mit einem $d_{50}$ von maximal 100 $\mu$m, einem $d_{10}$ im Bereich von 0.01 bis 20 $\mu$m und einem $d_{90}$ bei maximal 200$\mu$m eingesetzt. Die Erfindung betrifft deshalb vorzugsweise Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden volumenmittleren Partikelgrößenverteilung mit einem $d_{50}$ von maximal 100 $\mu$m, einem $d_{10}$ im Bereich von 0.01 bis 20 $\mu$m und einem $d_{90}$ bei maximal 200$\mu$m eingesetzt wird.

Besonders bevorzugt wird $Al_2O_3$ mit einer nach ISO 13320 mittels Laserbeugung zu bestimmenden monomodalen, volumenmittleren Partikelgrößenverteilung eingesetzt; siehe EP 3 670 589 A1. Die Auswertung der mittels Laserbeugung erhaltenen Daten erfolgt über ein volumenbezogenes Histogramm mit logarithmischer Abszisse. Dazu werden die Partikelgrößen in Größenklassen unterteilt. Jede Dekade wird über einen Messbereich von 0.01 $\mu$m bis 10000 $\mu$m in 18 Größenklassen unterteilt. Somit entstehen 108 Größenklassen, deren Breite der Größenklasse y der Formel

$$y = 0{,}01 \cdot e^{\frac{\ln(10) \cdot x}{18}} - 0{,}01 \cdot e^{\frac{\ln(10) \cdot (x-1)}{18}}$$

entspricht, wobei x die fortlaufende Zahl der Größenklassen im Bereich von 1 bis 108 beschreibt.

Zur Definition des Begriffs "monomodal" sei verwiesen auf: https://de.wikipedia.org/wiki/Partikelgr%C3%B6%C3%9Fenverteilung

Erfindungsgemäß liegt eine monomodale Partikelgrößenverteilung dann vor, wenn die Auftragung des Volumens der Aluminiumoxid-Partikelgrößen in [%] (= Y-Achse im Histogramm) gegen die Größenklasse in micrometer [µm] (= X-Achse im Histogramm) vorzugsweise nur ein Maximum in Form einer Gauß'schen Kurve bildet und gegebenenfalls auftretende weitere Maxima ein Volumen von 10% nicht überschreiten.

Der Begriff der "Partikelgrößenverteilung" ist der Statistik entlehnt. Dort werden Häufigkeiten und Häufigkeitsverteilungen eines beliebigen Merkmals, z.B. Fertigungstoleranzen, betrachtet. Im Bereich der Partikeltechnologie und der Partikelmesstechnik bzw. der Dispersitätsanalyse wird als Merkmal der Äquivalentdurchmesser eines Partikels gewählt. Aus der allgemeinen Häufigkeitsverteilung der Statistik ergibt sich die Partikelgrößenverteilung, die häufig auch als Korngrößenverteilung bezeichnet wird. Die Dichteverteilung von Partikelgrößen zeigt zumeist die Form einer Gaußschen Glockenkurve. Weist die Dichteverteilung von Partikelgrößen lediglich ein Maximum auf, so spricht man von einer monomodalen Verteilung. Bei zwei Maxima ist die Verteilung bimodal. Der Abszissenwert des größten Maximums wird als Modalwert bezeichnet. Die Partikelgrößenverteilung des Aluminiumoxids wird mittels Laserbeugung nach ISO13320 ermittelt. Für die Messung wurden im Rahmen der vorliegenden Erfindung die optischen Stoffdaten für Aluminiumoxid verwendet und nach der Mie-Theorie ausgewertet; siehe hierzu: https://de.wikipedia.org/wiki/Laserbeuqunqs-Partikelgr%C3%B6%C3%9Fenanalyse. $d_{10}$ $d_{50}$ und $d_{90}$ sind diejenigen Durchmesser bei denen 10%, 50% (Median) bzw. 90% der Partikel bezogen auf das Gesamtvolumen einen kleineren Durchmesser haben.

Besonders bevorzugt wird als Komponente b) ein Aluminiumoxid mit einer nach ISO 13320 mittels Laserbeugung zu bestimmenden monomodalen, volumenmittleren Partikelgrößenverteilung mit einem $d_{50}$ von maximal 100 µm, einem $d_{10}$ im Bereich von 0.01 bis 20 µm und einem $d_{90}$ im Bereich von 1 bis 100µm eingesetzt. Die Erfindung betrifft deshalb besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem $d_{50}$ von maximal 100 µm, einem $d_{10}$ im Bereich von 0.01 bis 20 µm und einem $d_{90}$ im Bereich von 1 bis 100µm eingesetzt wird.

Ganz besonders bevorzugt wird als Komponente b) ein Aluminiumoxid mit einer nach ISO 13320 mittels Laserbeugung zu bestimmenden monomodalen, volumenmittleren Partikelgrößenverteilung mit einem $d_{50}$ im Bereich von 0,1 bis 50 µm, einem $d_{10}$ im Bereich von 0.01 bis 20 µm und einem $d_{90}$ im Bereich von 1 bis 100 µm eingesetzt. Die Erfindung betrifft deshalb ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem $d_{50}$ im Bereich von 0.1 bis 50 µm, einem $d_{10}$ im Bereich von 0.01 bis 20 µm und einem $d_{90}$ im Bereich von 1 bis 100 µm eingesetzt wird.

Insbesondere ganz besonders bevorzugt wird als Komponente b) ein Aluminiumoxid mit einer nach ISO 13320 mittels Laserbeugung zu bestimmenden monomodalen, volumenmittleren Partikelgrößenverteilung mit einem $d_{50}$ im Bereich von 0.5 bis 5 µm, einem $d_{10}$ im Bereich von 0.5 bis 2 µm und einem $d_{90}$ im Bereich von 2 bis 10 µm eingesetzt. Die Erfindung betrifft deshalb insbesondere ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem $d_{50}$ im Bereich von 0.5 bis 5 µm, einem $d_{10}$ im Bereich von 0.5 bis 2 µm und einem $d_{90}$ im Bereich von 2 bis 10 µm eingesetzt wird.

Die erfindungsgemäß als Komponente b) zu verwendenden $Al_2O_3$ Partikel, können in unterschiedlichen Formen vorliegen, die durch das Aspektverhältnis beschrieben werden können. Bevorzugt werden Partikel mit einem Aspektverhältnis von 1 bis 100, besonders bevorzugt 1 bis 30, ganz besonders bevorzugt 1 bis 10 eingesetzt. In EP 3 164 694 A1 werden einige Verfahren zur Bestimmung des Aspektverhältnisses beschrieben. Bei kamerabasierten Verfahren werden die Partikel als zweidimensionale Bilder auf dem Sensor der Kamera abgebildet. Ist der Sensor eine CCD-Matrix oder ein CMOS-Bildsensor wird eine entsprechende Bildauswertesoftware zur Partikelformbestimmung verwendet. In DE 198 02 141 C1 ist eine Lösung mit Matrixkamera und in EP 1 972 921 A1 ist eine Lösung mit zwei Kameras beschrieben. Ist der Sensor eine CCD-Zeile, wird die abgebildete Partikelfläche aus den gemessenen Sehnenlängen bei bekannter Partikelgeschwindigkeit zusammengesetzt. Entsprechende Vorrichtungen und Verfahren sind in DE 10 2009 056 503 A1 (mit Sensorzeile), DE 10 2004 056 520 A1 (mit CCD-Zeile), DE 43 13 688 A1 (mit CCD- Zeile), DE 41 19 240 C2 (mit CCD-Zeile), DD 278 859 A1 (mit CCD-Liniensensor), DD 260 764 A1 (mit CCD-Zeilensensor) und DD 232760 A1 (mit einzeiliger Fernsehkamera) aufgeführt. DE 196 28 348 C1 schlägt eine Bestimmung der Partikelform mit einer Zeile aus einzelnen Lichtwellenleitern vor, wobei eine zweite Lichtwellenleiterzeile zur Ermittlung der Geschwindigkeit eingesetzt wird. Beugungsbasierte Verfahren nutzen die Abhängigkeit des Partikelbeugungsbildes von der Partikelform. Dabei werden die Partikel mit kohärentem Licht bestrahlt und die Lichtintensitätsverteilung des Beugungsbildes mit einem geeigneten

Empfänger gemessen. Die Verteilung der Lichtintensität im Beugungsbild hängt von der Form der Partikel ab. Lösungen hierfür enthalten DE 694 06 683 T2 (mit Ringsensor) und DE 102 18 413 B4. Die Druckschrift DE 41 29 105 A1 offenbart eine Bestimmung der Partikelform mit Hilfe einer Streulichtmessung. Da sich die genannten Verfahren lediglich vom Aufwand her unterscheiden, kann der Fachmann aus diesen im Stand der Technik genannten Verfahren frei wählen.

Erfindungsgemäß als Komponente b) einzusetzendes $Al_2O_3$ ist vorzugsweise mit wenigstens einer Oberflächenmodifizierung auf Basis wenigstens eines Aminosilans versehen. Als Oberflächenmodifizierung werden silanbasierte organische Kopplungsmittel bezeichnet, welche die Anbindung an die thermoplastische Matrix verbessern sollen.

Bevorzugte Oberflächenbehandlungsmittel bzw. Oberflächenmodifizierungen sind Aminosilane mit der allgemeinen Formel (I)

$$(RO)_3\text{-Si-}(CH_2)_n\text{-X} \qquad \text{(I)}$$

worin

R für einen organischen Rest ausgewählt aus der Gruppe Methyl, Ethyl, i-Propyl und Methoxymethyl steht,

n für eine ganze Zahl von 0 bis 12 - Endwerte eingeschlossen - steht, und

X für Amin steht.

Bevorzugt wird für die Oberflächenbehandlung bzw. Oberflächenmodifizierung der Komponente b) wenigstens ein Aminosilan ausgewählt aus der Gruppe
3-Aminopropyltriethoxysilan [CAS 919-30-2], 3-Aminopropyltrimethoxysilan [CAS 13822-56-5], N-(2-aminoethyl)-3-aminopropyltrimethoxysilan [CAS 1760-24-3], N-(2-aminoethyl)-3-aminopropyltriethoxysilan [CAS 5089-72-5], 3-(N-cyclohexylamino)propyltrimethoxysilan [CAS 3068-78-8], und N,N-(Diethylaminomethyl)triethoxysilan [CAS 15180-47-9] eingesetzt.

Erfindungsgemäß Silan basierte Oberflächenmodifizierungen und deren Herstellung sind dem Fachmann prinzipiell aus US 7,547,743 B2 bekannt, deren Inhalt bezüglich der darin offenbarten Herstellung von Organopolysiloxanen von der vorliegenden Anmeldung vollumfänglich umfasst wird.

Vorzugsweise wird das für die Oberflächenmodifizierung einzusetzende Aminosilan in Mengen im Bereich von 0.05 bis 5 Massenanteilen, besonders bevorzugt in Mengen im Bereich von 0.1 bis 1 Massenanteilen, bezogen auf 100 Massenanteile Aluminiumoxid, aufgetragen.

Die Oberflächenbehandlung bzw. Oberflächenmodifizierung des Aluminiumoxids mit Aminosilan kann unmittelbar vor dem Einsatz des Aluminiumoxids erfolgen oder es kann bereits zuvor oberflächenbehandeltes Aluminiumoxid eingesetzt werden. Die oben genannten Aminosilane reagieren beim Kontakt mit dem Aluminiumoxid zu Silanolen, der jeweilige Alkoholrest wird abgespalten.

Erfindungsgemäß insbesondere bevorzugt wird als Komponente b) Martoxid® MPS-2 [CAS No. 1344-28-1] der Martinswerk GmbH, Bergheim, Deutschland, eingesetzt.

**Komponente c)**

Als Komponente c) wird Magnesiumhydroxid [CAS Nr. 1309-42-8] eingesetzt.

Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Die Reinheit des Magnesiumhydroxids ergibt sich aus einem möglichst kleinen Anteil an Spezies verschieden von Magnesiumhydroxid. Das als Komponente c) bevorzugt einzusetzende Magnesiumhydroxid hat einen durch Röntgenfluoreszenz (XRF) an geglühter Substanz gemäß ISO 12677 zu bestimmenden Silicium-Anteil $< 15000$ ppm, bevorzugt $< 5000$ ppm und besonders bevorzugt $< 500$ ppm.

Besonders bevorzugt hat das erfindungsgemäß einzusetzende Magnesiumhydroxid eine Reinheit, d.h. einen $Mg(OH)_2$-Anteil, von mindestens 96 Gew-%, bevorzugt mindestens 98 Gew-%.

Besonders bevorzugt hat das erfindungsgemäß einzusetzende Magnesiumhydroxid zusätzlich zum Siliciumgehalt und/oder zusätzlich zum Reinheitsgrad einen durch Röntgenfluoreszenz (XRF) an geglühter Substanz gemäß ISO 12677 zu bestimmenden Eisengehalt (Fe) $< 1500$ ppm, bevorzugt $< 1000$ ppm, besonders bevorzugt $< 300$ ppm.

Insbesondere ist das Magnesiumhydroxid nicht-mineralischen, also synthetischen Ursprungs. Als Verfahren zur Herstellung der Komponente b) synthetischen Ursprungs kommen vorzugsweise die Pyrohydrolyse wässriger Magnesiumchloridlösungen oder die Fällung von Magnesiumsalzlösungen mit gebranntem und gelöschtem Dolomit oder Kalkmilch in Betracht.

Als Komponente c) einzusetzendes Magnesiumhydroxid kann unbeschlichtet oder aber mit einer Schlichte versehen sein. Eine Schlichte ist eine Imprägnierflüssigkeit, die durch Sprühen oder Tauchen vor der Weiterverarbeitung einer Komponente, hier dem Magnesiumhydroxid, aufgebracht wird, um das Eigenschaftsprofil oder die Verarbeitung einer Komponente zu verbessern. Vorzugsweise wird Komponente c) mit Schlichten auf Basis von Stearaten oder Aminosiloxanen, besonders bevorzugt mit Aminosiloxanen versehen.

Vorzugsweise als Komponente c) einzusetzendes Magnesiumhydroxid hat eine mittlere Teilchengröße d50 im Bereich von 0,5 µm bis 6 µm, wobei ein d50 im Bereich von 0,7 µm bis 3,8 µm bevorzugt und ein d50 im Bereich von 1,0 µm bis 2,6 µm besonders bevorzugt ist. Geeignete Messverfahren zur Bestimmung des d50 ist insbesondere die Laserbeugung zum Beispiel gemessen mit einem Malvern Mastersizer 2000. Die gewünschten Teilchengrößen können beispielsweise durch das Mahlen von Magnesiumhydroxid erzielt werden. Bezüglich der mittleren Teilchengrößen in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50 % der Partikelmenge liegen (Medianwert) liegen. Erfindungsgemäß bestimmt wird der d50-Wert der Komponente b) durch Laserbeugung (Lichtstreuung) gemäß ISO 13320 nach Dispergierung in Wasser gemäß ISO 14887. Alternative Dispergiermittel werden im White Paper "Dispersing Powders in Liquid for Particle Size Analysis" der Horiba Instruments Inc, Albany, New York, 2013, Tabelle 2 beschrieben.

Erfindungsgemäß geeignete Magnesiumhydroxidtypen sind insbesondere Magnifin® H5IV der Martinswerk GmbH, Bergheim, Deutschland oder Hidromag® Q2015 TC der Firma Penoles, Mexiko-Stadt, Mexico, wobei Magnifin® H5IV insbesondere bevorzugt ist.

**Komponente d)**

Die Herstellung der als Komponente d) einzusetzenden organischen, halogenfreien, **epoxidierten Verbindungen** mit mindestens zwei Epoxid-Gruppen pro Molekül ist dem Fachmann bekannt. Organische, halogenfreie, epoxidierte Verbindungen sind etwa Polyglycidylether oder Poly-(beta-methylglycidyl)-ether, vorzugsweise erhältlich durch Umsetzung einer Verbindung mit mindestens zwei freien alkoholischen oder phenolischen Hydroxygruppen und / oder durch Umsetzung von phenolischen Hydroxygruppen mit Epichlorhydrin.

Beispielhafte Polyglycidylether oder Poly-(beta-methylglycidyl)-ether leiten sich ab von acyclischen Alkoholen, insbesondere Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimetylpropan, Bistrimethylolpropan, Pentaerythrit, Sorbit sowie von Polyepichlorhydrinen.

Alternative Polyglycidylether oder Poly-(beta-methylglycidyl)-ether leiten sich ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en, oder sie besitzen aromatische Kerne basierend auf N,N-Bis-8,2-hydroxyethyl)-anilin oder p,p'-Bis-(2-hydroxyethyl-amino)-diphenylmethan.

Beispielhafte organische, epoxidierte Verbindungen basieren zudem auf einkernigen Phenolen oder auf mehrkernigen Phenolen. Einkernige Phenole sind etwa Resorcin oder Hydrochinon. Mehrkernige Phenole sind etwa Bis-(4hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon, wobei 2,2-Bis-(4-hydroxyphenyl)-propan besonders bevorzugt sein kann.

Beispielhafte Kondensationsprodukte von Phenolen mit Formaldehyd sind Phenol-Novolake. Ausgestaltungen der als Komponenten d) einzusetzenden epoxidierten Verbindungen sind solche, die auf mehrkernigen Phenolen basieren und mindestens eine, bevorzugt 2 endständige Epoxy-Gruppen aufweisen. Diese können beispielsweise nach einem Verfahren gemäß US2002/0128428 A1 hergestellt werden, wobei darunter Varianten mit einem nach ISO 3001 zu bestimmenden Epoxy Index im Bereich von 300 bis 2000 Gramm pro Äquivalent sind. Beschrieben werden Varianten mit einem nach ISO 3001 zu bestimmenden Epoxy Index im Bereich von 450 bis 1500 Gramm pro Äquivalent und etwa Varianten mit einem nach ISO 3001 zu bestimmenden Epoxy Index im Bereich von 450 bis 750 Gramm pro Äquivalent.

Als Komponente d) weiterhin alternativ einzusetzende organische, halogenfreie Epoxid-Verbindungen mit mindestens 2 Epoxid-Funktionen enthalten in beliebiger Kombination und Häufigkeit neben dieser nachfolgend gezeigten Epoxid-enthaltenden Einheit

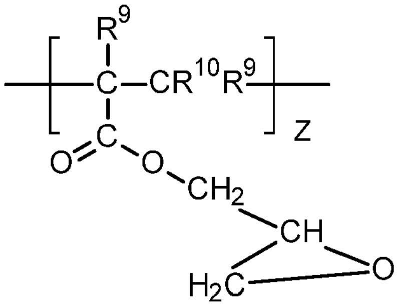

auch diese nachfolgend gezeigte Einheit

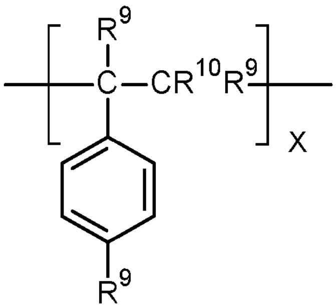

und/oder diese nachfolgend gezeigte Einheit

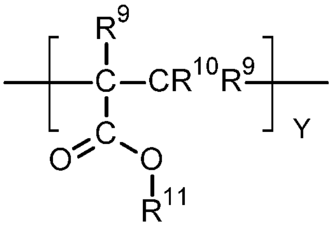

.

worin $R^9$, $R^{10}$ unabhängig voneinander für H oder $C_1$-$C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal $\geq 1$ ist,

Z für eine ganze Zahl im Bereich von 2 bis 20 steht und

R* für H oder $C_1$-$C_8$-Alkyl steht,

wobei die mit X,Y,Z- gekennzeichneten Einheiten wiederholt und in beliebiger Reihenfolge auftreten können.

Den Kettenabschluss der organischen halogenfreien Epoxid-Verbindungen bilden also die Endgruppen R* die unabhängig voneinander für H oder $C_1$-$C_8$ -Alkyl stehen.

Beispielsweise entspricht ein als Komponente d) einzusetzendes organisches, halogenfreies Epoxid der Formel (II)

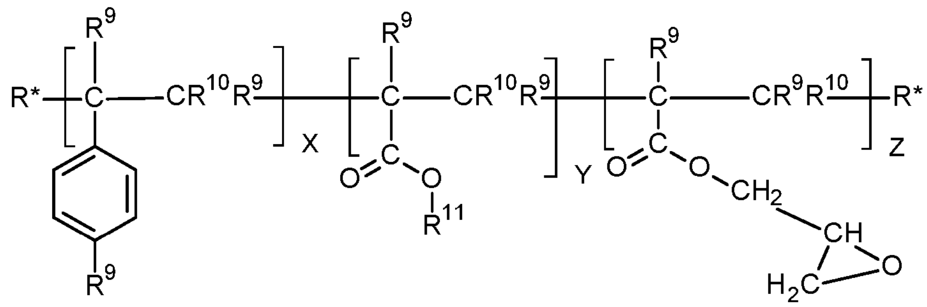

(II)

worin $R^9$, $R^{10}$ unabhängig voneinander für H oder $C_{1-}C_8$-Alkyl stehen,

$R^{11}$ für $C_1$-$C_8$ -Alkyl steht,

X und Y jeweils für ganze Zahlen im Bereich von 0 bis 20 stehen,

mit der Maßgabe, dass entweder X oder Y mindestens einmal ≥1 ist,

Z für eine ganze Zahl im Bereich von 2 bis 20 steht und

R* für H oder $C_1$-$C_8$-Alkyl steht,

wobei die mit X,Y,Z- gekennzeichneten Einheiten wiederholt und in beliebiger Reihenfolge auftreten können.

In einer Ausführungsform werden dabei als Komponente d) epoxyfunktionelle Verbindungen auf Basis von Glycidylmethacrylat modifizierten Styrol-enthaltenden Polymeren eingesetzt, erhältlich durch Polymerisation von Glycidylmethacrylat mit Styrol, sowie gegebenenfalls Acrylsäure und/oder Methacrylsäure in Anlehnung an DE 10 316 615 A1**,** wobei anstatt oder zusätzlich zur Acrylsäure auch ein oder mehrere Acrylsäureester und anstatt oder zusätzlich zur Methacrylsäure auch ein oder mehrere Methacrylsäureester eingesetzt werden können. Ester sind dabei etwa solche auf Basis von Methyl, Ethyl, Propyl, n-Butyl, t-Butyl, 2-Ethylhexyl und/oder Benzyl. Derartige Komponenten d) sind auch kommerziell verfügbar. Insbesondere sind diese unter dem Namen Joncryl® der Fa. BASF AG bekannt, im speziellen Joncryl® ADR4400.

In einer weiteren Ausführungsform werden als Komponente d) epoxyfunktionelle Verbindungen auf Basis von Glycidylmethacrylat und/oder Glycidylacrylat modifizierten Ethylen-Acrylat Polymeren eingesetzt, erhältlich durch Polymerisation von Ethylen, Glycidylmethacrylat und/oder Glycidylacrylat und Acrylsäure und/oder Methacrylsäure, wobei anstatt oder zusätzlich zur Acrylsäure auch ein oder mehrere Acrylsäureester und anstatt oder zusätzlich zur Methacrylsäure auch ein oder mehrere Methacrylsäureester eingesetzt werden können. Ester sind dabei etwa solche auf Basis von Methyl, Erthyl, Propyl, n-Butyl, t-Butyl, 2-Ethylhexyl und/oder Benzyl. Diese sind auch kommerziell verfügbar. Insbesondere sind diese statistischen Terpolymere aus Ethylen, Methylacrylat und Glycidylmethacrylat unter dem Namen Lotader® der Fa. Arkema, Colombes, Frankreich bekannt, im speziellen Lotader® AX8700 und Lotader AX8900. Anstelle von Ethylen können ganz oder teilweise auch andere Olefine, insbesondere alpha-Olefine, eingesetzt werden, die bevorzugt 2 bis 10 Kohlenstoffatome enthalten. Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

In einer weiteren Ausführungsform werden als Komponente d) epoxidierte Fettsäureester des Glycerins, insbesondere epoxidierte Pflanzenöle, eingesetzt. Diese werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen und organischen Peroxycarbonsäuren (Prileschajew-Reaktion) erfolgen. Verfahren zur Herstellung epoxidierter Pflanzenöle sind zum Beispiel in Smith, March, March's Advanced Organic Chemistry, 5. Auflage, Wiley-Interscience, New York, 2001 beschrieben. Epoxidierte Fettsäureester des Glycerins sind etwa Pflanzenöle. Beispielhaft als Komponente d) einzusetzender epoxidierter Fettsäureester des Glycerins ist epoxidiertes Sojaöl [CAS Nr. 8013-07-8].

Weitere als Komponente d) einzusetzende organische, halogenfreie, aromatische Epoxid-Verbindungen mit 2 endständigen Epoxid-Funktionen sind oligomere Reaktionsprodukte aus Bisphenol A mit Epichlorhydrin. Als Komponente d) wird etwa ein organisches, halogenfreies, oligomeres Reaktionsprodukt der Formel (III) aus der Umsetzung von Bisphenol A mit Epichlorhydrin eingesetzt,

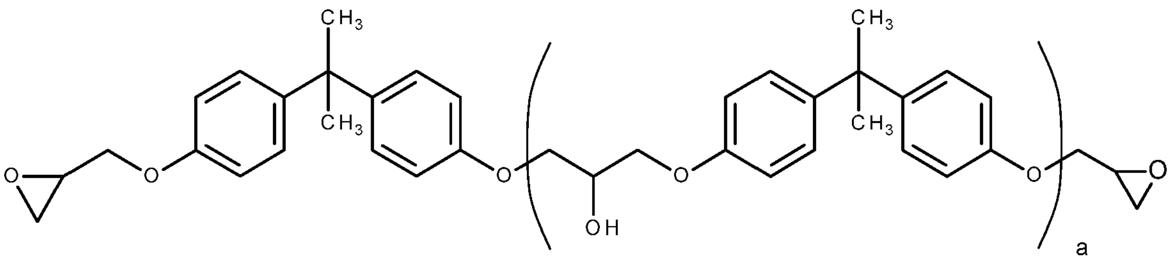

(III),

worin a für eine ganze Zahl im Bereich von 0 bis 12 steht, vorzugsweise worin a für eine ganze Zahl im Bereich von 1 bis 8 steht, besonders bevorzugt worin a für eine ganze Zahl im Bereich von 1 bis 6 steht, ganz besonders bevorzugt worin a für eine ganze Zahl im Bereich von 2 bis 4 steht und insbesondere ganz besonders bevorzugt im Bereich von 2 bis 3 steht, wobei a für die durchschnittliche Anzahl an Wiederholungseinheiten steht.

Entsprechend ihrer Stöchiometrie zeigen derartige Reaktionsprodukte der Formel (III) für den besonders bevorzugten Bereich mit a im Bereich von 2 bis 4 dann ein gemäß EN ISO 10927 bestimmbares mittleres Molekulargewicht von gerundet 900 bis 1500 g/mol.

Bevorzugt weist eine erfindungsgemäß als Komponente d) einzusetzende EpoxidVerbindung einen nach Mettler gemäß DIN 51920 zu bestimmenden Erweichungspunkt im Bereich von 0 bis 150°C auf, besonders bevorzugt im Bereich von 50°C bis 120°C, ganz besonders bevorzugt im Bereich von 60°C bis 110°C und insbesondere im Bereich von 75°C bis 95°C. Der Erweichungspunkt nach Mettler ist die Temperatur, bei der die Probe aus einem zylindrischen Nippel mit einer Ausflussöffnung von 6,35 mm Durchmesser ausfließt, wobei sie eine 19 mm tiefer liegende Lichtschranke unterbricht. Zu diesem Zweck wird die Probe an Luft unter konstanten Bedingungen aufgeheizt.

Von den genannten und erfindungsgemäß als Komponente d) einzusetzenden Epoxid-Verbindungen sind oligomere Reaktionsprodukte aus Bisphenol A mit Epichlorhydrin der allgemeinen Formel (III) [CAS Nr. 25068-38-6] mit einem nach ISO 3001 zu ermittelnden Epoxy Index im Bereich von 450 bis 600 Gramm pro Äquivalent und gemäß DIN 51920 zu bestimmenden Erweichungspunkt im Bereich von 75°C bis 95°C insbesondere ganz besonders bevorzugt. Diese können beispielsweise als Araldite® GT7071 oder Araldite® GT7072 der Firma Huntsman Advanced Materials, Everberg, Belgien bezogen werden.

**Komponente e)**

In einer bevorzugten Ausführungsform enthalten erfindungsgemäße Zusammensetzungen und daraus herzustellende Formmassen sowie wiederum daraus herzustellende Erzeugnisse, insbesondere Ladekomponenten, zusätzlich zu den Komponenten a), b), c) und d) noch wenigstens eine Komponente e), ein von a), b), c) und d) verschiedenes Additiv. Das wenigstens eine als Komponente e) einzusetzende Additiv wird vorzugsweise in Mengen im Bereich von 0,01 bis 30 Massenanteilen bezogen auf 100 Massenanteile der Komponente a) eingesetzt.

Bevorzugte Additive der Komponente e) sind Gleit- und Entformungsmittel, UV-Stabilisatoren, Farbmittel, kettenverlängernd wirkende Additive, Weichmacher, Fließhilfsmittel, Thermostabilisatoren, Antioxidantien, Gammastrahlenstabilisatoren, Hydrolysestabilisatoren, Elastomermodifikatoren, Antistatika, Emulgatoren, Nukleierungsmittel, Verarbeitungshilfsmittel, Antitropfmittel, Flammschutzmittel verschieden von Komponente c) sowie Füll- und Verstärkungsstoffe verschieden von Komponente b).

Die Additive der Komponente e) können alleine, oder in Mischung bzw. in Form von Masterbatchen eingesetzt werden.

Vorzugsweise werden halogenfreie Additive eingesetzt.

Als **Gleit- und Entformungsmittel** wird wenigstens eines aus der Reihe der langkettigen Fettsäuren, der Salze langkettiger Fettsäuren, der Esterderivate oder Amidderivate langkettiger Fettsäuren sowie Montanwachse ausgewählt.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere $C_{16}$-$C_{18}$ Fettsäureester des Pentaerythritols [CAS Nr. 68604-44-4] oder [CAS Nr. 85116-93-4]. Bevorzugte Amidderivate langkettiger Fettsäuren sind solche auf Basis von Ethylendiamin, insbesondere Ethylen-bis-stearylamid [CAS Nr. 110-30-5].

Montanwachse im Sinne der vorliegenden Erfindung sind Mischungen aus geradkettigen, gesättigten Carbonsäuren mit Kettenlängen im Bereich von 28 bis 32 C Atomen. Erfindungsgemäß besonders bevorzugt werden Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Ethylen-bis-stearylamid und/oder Ethylenglycoldimontanat, hier insbesondere Licowax® E [CAS-Nr. 74388-22-0] der Fa. Clariant, Muttenz, Basel ganz besonders bevorzugt ist und Ethylen-bis-stearylamid [CAS Nr. 110-30-5] z.B. erhältlich als Loxiol® EBS von Emery Oleochemicals GmbH, Düsseldorf, Deutschland insbesondere ganz besonders bevorzugt ist.

Als **UV-Stabilisatoren** werden bevorzugt substituierte Resorcine, Salicylate, Benzotriazole, Triazin-Derivate oder Benzophenone eingesetzt.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid (sofern nicht bereits als Füllstoff eingesetzt), Ultramarinblau, Eisenoxid, Zinksulfid oder Ruß eingesetzt werden.

Für das erfindungsgemäß in einer Ausführungsform als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al-Dotierung von 0,3-3,0 Gew.-% (gerechnet als $Al_2O_3$) und einem Sauerstoffüberschuss in der Gasphase bei der Oxidation des Titantetrachlorids zu Titandioxid von mindestens 2%; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und/oder Al und/oder Zr und/oder durch den Einsatz von Sn-Verbindungen.

Bevorzugt ist die Oberfläche von pigmentärem Titandioxid mit amorphen Ausfällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in die Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als Farbmittel der Komponente e) einzusetzendes Titandioxid [CAS Nr. 13463-67-7] weist bevorzugt eine mittlere Teilchengröße d50 im Bereich von 90 bis 2000nm, besonders bevorzugt im Bereich von 200 bis 800nm auf. Die mittlere Teilchengröße d50 ist der aus der Teilchengrößenverteilung ermittelte Wert, zu dem 50Gew.-% der Teilchen einen äquivalenten Kugeldurchmesser kleiner als diesen d50 Wert aufweisen. Die zugrunde liegende Norm ist ISO 13317-3.

Die Angaben der Teilchengrößenverteilung bzw. der mittleren Teilchengröße beim Titandioxid beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Kommerziell erhältliches Titandioxid sind beispielsweise Kronos® 2230, Kronos® 2233, Kronos® 2225 und Kronos® vlp7000 der Fa. Kronos, Dallas, USA.

Bevorzugt als Komponente e) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente e) einzusetzende **Fließhilfsmittel** sind Copolymerisate enthaltend wenigstens ein α-Olefin mit wenigstens einen Methacrylsäurester oder Acrylsäureester eines aliphatischen Alkohols. Besonders bevorzugt sind Copolymerisate aus mindestens einem α-Olefin mit mindestens einem Methacrylsäurester oder Acrylsäureester eines aliphatischen Alkohols. Ganz besonders bevorzugt sind Copolymerisate aus einem α-Olefin und einem Acrylsäureester eines aliphatischen Alkohols. Insbesondere bevorzugt sind dabei Copolymerisate bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Insbesondere ganz besonders bevorzugt ist ein Copolymerisat aus Ethen und Acrylsäure-(2-ethyl)-hexylester. Erfindungsgemäß als Fließhilfsmittel geeignete Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16kg von mindestens 100g / 10 min, bevorzugt von mindestens 150g / 10 min, besonders bevorzugt von mindestens 300g/10min

aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Bevorzugt als Komponente e) einzusetzende **Elastomermodifikatoren** umfassen u.a. ein oder mehrere Pfropfpolymerisate von

e.1 5 bis 95 Gew.-%, vorzugsweise 30 bis 90 Gew.-%, wenigstens eines Vinylmonomeren auf

e.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C. Die Gewichtsprozente beziehen sich in diesem Fall auf 100 Gew.-% des als Komponente e) einzusetzenden Elastomermodifikators.

Die Pfropfgrundlage e.2 hat im allgemeinen eine mittlere Teilchengröße (d50-Wert) im Bereich von 0,05 bis 10μm, vorzugsweise im Bereich von 0,1 bis 5μm, besonders bevorzugt im Bereich von 0,2 bis 1μm.

Monomere e.1 sind vorzugsweise Gemische aus

e.1.1 50 bis 99Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat und
e.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid. Die Gewichtsprozente beziehen sich in diesem Fall auf 100 Gew.-% des als Komponente e) einzusetzenden Elstomermodifikators.

Bevorzugte Monomere e.1.1 sind ausgewählt aus mindestens einem der Monomere Styrol, α-Methylstyrol und Methylmethacrylat, bevorzugte Monomere e.1.2 sind ausgewählt aus mindestens einem der Monomere Acrylnitril, Maleinsäureanhydrid, Glycidylmethacrylat und Methylmethacrylat.

Besonders bevorzugte Monomere sind e.1.1 Styrol und e.1.2 Acrylnitril.

Für die in den Elastomermodifikatoren einzusetzenden Pfropfpolymerisate geeignete Pfropfgrundlagen e.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen e.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß e.1.1 und e.1.2, mit der Maßgabe, dass die Glasübergangstemperatur der Komponente e.2 bei <10°C, vorzugsweise bei <0°C, besonders bevorzugt bei <-10°C liegt.

Besonders bevorzugte Propfgrundlagen e.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 290 beschrieben sind.

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen e.2 dievorzugsweise Polymerisate aus Acrylsäurealkylestern, gegebenenfalls mit bis zu 40 Gew.-%, bezogen auf e.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Weitere bevorzugt geeignete Pfropfgrundlagen gemäß e.2 sind Silikonkautschuke mit pfropfaktiven Stellen, wie

sie in DE-A 3 704 657, DE-A 3 704 655, DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z. B. Metablen® SRK200 eingesetzt werden. Unter solchen mit Methylmethacrylat als Schale können z. B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf 100 Gew.-% der Pfropfgrundlage e.2.

Bei cyclischen vernetzenden Monomeren mit mindestens 3 ethylenisch ungesättigten Gruppen ist es vorteilhaft, die Menge auf unter 1 Gew.-% bezogen auf 100 Gew.-% der Pfropfgrundlage e.2 zu beschränken.

Bevorzugte "andere" polymerisierbare, ethylenisch ungesättigte Monomere, die neben den Acrylsäureestern gegebenenfalls zur Herstellung der Pfropfgrundlage e.2 dienen können, sind Acrylnitril, Styrol, α-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage e.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugt als Komponente e) einzusetzende **Flammschutzmittel** verschieden von Komponente c) sind **halogenfrei.**

Zu den als Komponente e) bevorzugt einzusetzenden phosphorhaltigen Flammschutzmitteln gehören phosphorhaltige Verbindungen aus der Gruppe der organischen Metallphosphinate, wie Metallalkylphosphinate, insbesondere Zinkbisdietylphosphinat und insbesondere bevorzugt Aluminiumtrisdiethylphosphinat, sowie aus der Gruppe der anorganischen Metallphosphinate, insbesondere Aluminiumphosphinat und Zinkphosphinat, der mono- und oligomeren Phosphor- und Phosphonsäureester, insbesondere Triphenylphosphat (TPP), Resorcinol-bis-(diphenylphosphat) (RDP), Bisphenol-A-bis-diphenylphosphat (BDP) einschließlich Oligomere, Polyphosphonate, insbesondere Bisphenol A-diphenyl methylphosphonate copolymere wie z. B. Nofia™ HM1100 [CAS Nr. 68664-06-2] der Fa. FRX Polymers, Chelmsford, USA), ferner Derivate der 9,10-Dihydro-9-oxa-10-phosphaphenanthren-10-oxide (DOPO-Derivate)], Phosphonatamine, Metallphosphonate, insbesondere Aluminiumphosphonat und Zinkphosphonat, Phosphinoxide und Phosphazene. Besonders bevorzugte Phosphazene sind dabei Phenoxyphosphazenoligomere. Die Phosphazene und deren Herstellung sind z. B. in EP-A 728 811, DE-A 1961668 und WO-A 97/40092 beschrieben. Besonders bevorzugt werden erfindungsgemäß ringförmige Phenoxyphosphazene wie 2,2,4,4,6,6-Hexahydro-2,2,4,4,6,6-hexaphenoxytriazatriphosphorine [CAS Nr. 1184-10-7] und/oder solche, wie sie z. B. von der Fa. Fushimi Pharmaceutical Co. Ltd, Kagawa, Japan unter der Bezeichnung Rabitle® FP110 [CAS Nr. 1203646-63-2] erhältlich sind, eingesetzt.

Ebenso können stickstoffhaltige Flammschutzmittel einzeln oder im Gemisch als Flammschutzmittel der Komponente e) eingesetzt werden.

Bevorzugt sind Melamin- und/oder Guanidinsalze, insbesondere Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Melamincyanurat und Melaminpolyphosphat sowie Harnstoffphosphat sowie Harnstoffcyanurat. Darüber hinaus können kondensierte Melaminderivate wie Melem, Melam und Melon, sowie deren Umsetzungsprodukte mit kondensierten Phosphorsäuren Verwendung finden. Geeignet sind ebenfalls Tris(hydroxyethyl)isocyanurat oder dessen Umsetzungsprodukte mit Carbonsäuren, Benzoguanamin und dessen Addukte bzw. Salze sowie dessen am Stickstoff substituierte Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage. Weitere bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz.

Auch andere hier nicht speziell erwähnte Flammschutzmittel oder Flammschutzmittelsynergisten können als Komponente e) zum Einsatz kommen. Hierzu zählen auch rein anorganische Phosphorverbindungen, insbesondere roter Phosphor oder Borphosphathydrat. Ferner können auch mineralische Flammschutzadditive verschieden von Komponente c) oder Salze aliphatischer und aromatischer Sulfonsäuren, insbesondere Metallsalze der 1-Perfluorbutansulfonsäure eingesetzt werden. Infrage kommen ferner Flammschutzmittelsynergisten aus der Gruppe der sauerstoff-, stickstoff- oder schwefelhaltigen Metallverbindungen worin Metall für Antimon, Zink, Molybdän, Calcium, Titan, Magnesium oder Bor steht, bevorzugt Antimontrioxid, Antimonpentoxid, Natriumantimonat, Zinkoxid, Zinkborat, Calciumstannat, Zinkstannat, Zinkhydroxystannat, Zinksulfid, Molybdänoxid, sofern nicht bereits als Farbmittel eingesetzt Titandioxid, Magnesiumcarbonat, Calciumcarbonat, Calciumoxid, Titannitrid, Bornitrid, Magnesiumnitrid, Zinknitrid, Calciumborat, Magnesiumborat oder deren Mischungen.

Weitere bevorzugt als Komponente e) einzusetzende und geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone, sowie Antitropfmittel, insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden. Ein insbesondere bevorzugt geeignetes Beispiel für Tetrafluorethylen-Styrolacrylnitril-Harze ist z. B. Cycolac® INP 449 [CAS Nr. 1427364-85-9] der Fa. Sabic Corp., Riad, Saudi Arabien; ein insbesondere bevorzugt geeignetes Beispiel für Tetrafluorethylen-Acrylat-Harze ist z. B. Metablen A3800 [CAS Nr. 639808-21-2] der Fa. Mitsubishi Rayon Co., Ltd., Tokio, Japan. Antitropfmittel enthaltend Tetrafluorethylenpolymerisate werden erfindungsgemäß als Komponente e) bevorzugt in Mengen im Bereich von 0,01 bis 5 Massenanteilen, besonders bevorzugt im Bereich von 0,05 bis 2 Massenanteilen jeweils bezogen auf 100 Massenanteile der Komponente a) eingesetzt.

Sofern es der Einsatz erfordert, können in einer besonderen Ausführungsform der vorliegenden Erfindung als Komponente e) auch **halogenhaltige Flammschutzmittel** eingesetzt werden. Hierzu zählen handelsübliche organische Halogenverbindungen mit oder ohne Synergisten. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol und bromierte Polyphenylenether genannt.

Die als Komponente e) zusätzlich einzusetzenden Flammschutzmittel können in Reinform, sowie über Masterbatche oder Kompaktate dem Polyalkylentherephthalat oder Polycycloalkylenterephthalat zugesetzt werden.

Als Komponente e) bevorzugt einzusetzende **Thermostabilisatoren** sind ausgewählt aus der Gruppe der schwefelhaltigen Stabilisatoren, insbesondere Sulfide, Dialkylthiocarbamaten oder Thiodipropionsäuren, außerdem solche ausgewählt aus der Gruppe der Eisensalze und der Kupfersalze, hier insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-tert.-Butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS Nr. 35074-77-2] (Irganox® 259 der Fa. BASF SE, Ludwigshafen, Deutschland), Pentaerythrit-tetrakis-[3-(3,5-di-tert.-butyl-4-hydroxyphenyl)-propionat] [CAS Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich. Erfindungsgemäß insbesondere ganz besonders bevorzugt wird N,N'-Hexamethylen-bis-3,5-di-tert.-butyl-4-hydroxyhydrocinnamid [CAS No. 23128-74-7] als Thermostabilisator eingesetzt, das als Irganox® 1098 bei der BASF SE, Ludwigshafen, Deutschland erhältlich ist.

Unter den aliphatisch oder aromatisch substituierten Phosphiten wird bevorzugt Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird und Tetrakis(2,4-di-tert-butylphenyl)-1,1-biphenyl-4,4'-diylbisphosphonit [CAS Nr. 38613-77-3] eingesetzt, das als Hostanox® P-EPQ von der Fa. Clariant International Ltd., Muttenz, Schweiz bezogen werden kann.

In einer weiteren Ausführungsform der vorliegenden Erfindung enthalten erfindungsgemäße Zusammensetzungen neben den Komponenten a), b), c) und d) als Komponente e) wenigstens einen Füll- oder Verstärkungsstoff, vorzugsweise einen Füll- oder Verstärkungsstoff in Form von Fasern, insbesondere Glasfasern. Gemäß **http://de.wikipedia.org/wiki/Faser-Kunststoff-Verbund** unterscheidet man geschnittene Fasern, auch als Kurzfasern bezeichnet, mit einer Länge im Bereich von 0,1 bis 1mm, Langfasern mit einer Länge im Bereich von 1 bis 50mm und Endlosfasern

mit einer Länge L > 50mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200μm liegt.

Erfindungsgemäß bevorzugt als Komponente e) einzusetzende geschnittene Langglasfasern weisen vor einer Verarbeitung, insbesondere vor einer Verarbeitung im Compounder, eine Ausgangslänge im Bereich von 1 bis 50mm auf, besonders bevorzugt im Bereich von 1 bis 10mm, ganz besonders bevorzugt im Bereich von 2 bis 7mm. Die Ausgangslänge bezeichnet die durchschnittliche Länge der Glasfasern wie sie als Rohstoff bezogen und eingesetzt werden, bevor sie einem Misch- und/oder Verarbeitungsprozess zu erfindungsgemäßen Zusammensetzung(en), insbesondere zu erfindungsgemäßen Formmassen verarbeitet werden. Als Komponente e) einzusetzende Fasern, vorzugsweise Glasfasern, können bedingt durch die Verarbeitung, insbesondere Compoundierung, zur Formmasse oder zum Erzeugnis in der Formmasse oder im Enderzeugnis, hier einer Ladekomponente, einen kleineren d97- bzw. d50-Wert aufweisen, als die ursprünglich eingesetzten Fasern bzw. Glasfasern. So liegt der arithmetische Mittelwert der Faserlänge bzw. Glasfaserlänge nach der Verarbeitung häufig nur noch im Bereich von 150 μm und 300 μm.

Die Ermittlung der Faserlänge und Faserlängenverteilung bzw. Glasfaserlänge und Glasfaserlängenverteilung erfolgt im Rahmen der vorliegenden Erfindung im Falle verarbeiteter Fasern bzw. Glasfasern gemäß ISO 22314, welche zunächst eine Veraschung der Proben bei 625 °C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern berechnet und in geeigneter Weise als Histogramm dargestellt oder bei einer angenommenen Normalverteilung der gemessenen Glasfaserlängen $l$ mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

bestimmt werden. Dabei sind $l_c$ und $\sigma$ spezielle Kennwerte der Normalverteilung; $l_c$ ist der mittlere Wert und $\sigma$ die Standardabweichung (siehe: M. Schoßig, Schädigungsmechanismen in faserverstärkten Kunststoffen, 1, 2011, Vieweg und Teubner Verlag, Seite 35, ISBN 978-3-8348-1483-8**)**. Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die erfindungsgemäß bevorzugt als Füllstoff der Komponente e) einzusetzenden Glasfasern [CAS Nr. 65997-17-3)] haben bevorzugt einen Faserdurchmesser im Bereich von 7 bis 18μm, besonders bevorzugt im Bereich von 9 bis 15μm, der durch wenigstens eine dem Fachmann zur Verfügung stehende Möglichkeit zu ermitteln ist, insbesondere zu ermitteln durch μ-Röntgen-Computertomographie in Analogie zu "Quantitative Messung von Faserlängen und -verteilung in faserverstärkten Kunststoffteilen mittels μ-Röntgen-Computertomographie", J.KASTNER, et al. DGZfP-Jahrestagung 2007 - Vortrag 47**.** Die als Komponente e) vorzugsweise einzusetzenden Glasfasern werden bevorzugt als geschnittene oder gemahlene Glasfasern zugesetzt.

In einer Ausführungsform werden die als Komponente e) einzusetzenden Füll- und/oder Verstärkungsstoffe, insbesondere Glasfasern, bevorzugt mit einem geeigneten Schlichtesystem und einem Haftvermittler bzw. Haftvermittlersystem, besonders bevorzugt auf Silanbasis, ausgerüstet.

Erfindungsgemäß besonders bevorzugt sind deshalb Zusammensetzungen, Formmassen und Erzeugnisse, insbesondere Ladekomponenten, die zusätzlich zu den Komponenten a), b), c) und d) noch e) Glasfasern enthalten.

In einer weiteren bevorzugten Ausführungsform der vorliegenden Erfindung sind in den erfindungsgemäßen Zusammensetzungen, Formmassen, Erzeugnissen, insbesondere Ladekomponenten, neben den Komponenten a), b), c) und d) keine weiteren Komponenten enthalten.

## Bevorzugte Ausführungsformen

Vorzugsweise betrifft die Erfindung Zusammensetzungen oder Formmassen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer.

## Erzeugnisse

Gegenstand der vorliegenden Erfindung sind zudem auf den erfindungsgemäßen Zusammensetzungen bzw. Formmassen basierende Erzeugnisse der Elektro- oder Elektronikindustrie. Bevorzugte Erzeugnisse der Elektroindustrie sind Ladekomponenten, besonders bevorzugt Batterieladekomponenten zum Aufladen elektrischer Batterien, insbesondere bevorzugt Batterieladekomponenten zum Aufladen elektrischer Batterien für die Elektromobilität.

Erfindungsgemäß bevorzugte Batterieladekomponenten zum Aufladen elektrischer Batterien für die Elektromobilität und auf Basis erfindungsgemäßer Zusammensetzungen bzw. Formmassen sind Ladekabelstecker oder Ladeaufnahmeanordnung (Charging Inlet), wie sie in Fig. 1 der DE 10 2012 002 882 B4 unter den Ziffern 10 und 14 abgebildet sind. Der Inhalt der DE 10 2012 002 882 B4 wird von der vorliegenden Anmeldung vollumfänglich umfasst.

Erfindungsgemäß bevorzugte Ladeaufnahmeanordnungen auf Basis erfindungsgemäßer Zusammensetzungen bzw. Formmassen enthalten wenigstens eine hintere Gehäusewand, die AC/DC-Kabel, Kabelverteiler (Pin Holder), Gehäusefront und Anschlussmaske. Vorzugsweise basiert ein Kabelverteiler / Pin Holder auf einer erfindungsgemäßen Zusammensetzung bzw. Formmasse. Insbesondere bevorzugt ist ein erfindungsgemäßer Pin Holder oder Kabelverteiler aus einem Stück auf Basis erfindungsgemäßer Zusammensetzungen bzw. Formmassen gefertigt, das die stromführenden Kontakte (Pins) aufnimmt und somit eine einfache Montage und Fixierung der Pins in der Anschlussmaske durch die Gehäusefront ermöglicht. Gemäß DE 10 2012 002 882 B4 ist die Ladeaufnahmeanordnung am Fahrzeugkabelbaum befestigt. Der Fahrzeugkabelbaum enthält mehrere einzelne Adern. An einem Ende jeder Ader ist ein Anschluss befestigt. Mehrere Öffnungen in der Ladeaufnahmeanordnung sind zur Aufnahme dieser Anschlüsse ausgebildet. Jeder Anschluss enthält ein proximales Ende und ein distales Ende. Das proximale Ende jedes Anschlusses ist an einer Ader befestigt und wird durch eine der in der Basis der Ladeaufnahmeanordnung ausgebildeten Öffnungen aufgenommen, wobei die Vielzahl der Anschlüsse durch einen Kabelverteiler / Pin Holder idealerweise bereits für den Zusammenbau der Ladeaufnahmeanordnung exakt positioniert werden. Das distale Ende jedes Anschlusses erstreckt sich extern von der Basis einer Ladeaufnahmeanordnung zur Verbindung mit einem Gegenanschluss des Ladekabelsteckers.

Bevorzugter Gegenstand der Erfindung sind deshalb auch Erzeugnisse der Elektro- oder Elektronikindustrie, bevorzugte Ladekomponenten, besonders bevorzugt Batterieladekomponenten zum Aufladen elektrischer Batterien, insbesondere bevorzugt Batterieladekomponenten zum Aufladen elektrischer Batterien für die Elektromobilität, basierend auf Zusammensetzungen bzw. Formmassen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer.

Insbesondere bevorzugt sind Ladeaufnahmeanordnungen oder Komponenten einer Ladeaufnahmeanordnung aus der Gruppe hintere Gehäusewand, Kabelverteiler (Pin Holder), Gehäusefront und Anschlussmaske, basierend auf Zusammensetzungen bzw. Formmassen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer.

**Verfahren**

Gegenstand der vorliegenden Erfindung ist zudem ein Verfahren zur Herstellung erfindungsgemäßer Zusammensetzungen, wonach die Komponenten b), c) und d) sowie gegebenenfalls wenigstens eine Komponente e) in Polyamid eingemischt werden. Bevorzugt werden hierfür Extruder oder Kneter eingesetzt, besonders bevorzugt Extruder. Dabei handelt es sich um handelsübliche Rühr- und Mischaggregate.

In einer bevorzugten Ausführungsform der vorliegenden Erfindung erfolgt die Einmischung der Komponenten b), c) und d) sowie gegebenenfalls wenigstens einer Komponente e) ins Polyamid bei Temperaturen im Bereich von 230 bis 330°C.

Die vorliegende Erfindung betrifft weiterhin ein Verfahren zur Herstellung von Elektro- oder Elektronikkomponenten, bevorzugt Ladekomponenten, indem man Zusammensetzungen enthaltend die Komponenten a), b), c) und d) gegebenenfalls mit wenigstens einer Komponente e) in wenigstens einem Mischaggregat, vorzugsweise einem Compounder, zu Formmassen verarbeitet und diese einer Weiterverarbeitung, vorzugsweise einem Spritzgussverfahren zur Herstellung Polyamid basierter Ladekomponenten unterzieht.

Erfindungsgemäße Verfahren zur Herstellung von Erzeugnissen durch Spritzguss werden bei Schmelzetemperaturen im Bereich von 230 bis 330°C, bevorzugt im Bereich von 270 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar, durchgeführt.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Als Rohstoff werden erfindungsgemäße Zusammensetzungen eingesetzt, die vorzugsweise durch Compoundieren bereits zu einer Formmasse und diese wiederum vorzugsweise zu einem Granulat verarbeitet wurde. Nach dem Abkühlen (Erstarren) der in den temperierten Hohlraum eingespritzten Formmasse wird das Spritzgussteil entformt.

Bevorzugt betrifft die vorliegende Erfindung ein Verfahren zur Herstellung von Elektro- oder Elektronikkomponenten, bevorzugt Ladekomponenten, indem man Zusammensetzungen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer

in wenigstens einem Mischaggregat, vorzugsweise einem Compounder, zu Formmassen verarbeitet und diese einer Weiterverarbeitung, vorzugsweise einem Spritzgussverfahren zur Herstellung Polyamid basierter Ladekomponenten unterzieht. Bevorzugt wird wenigstens eine Komponente einer Ladeaufnahmeanordnung aus den erfindungsgemäßen Zusammensetzungen bzw. darauf basierenden Formmassen hergestellt, wobei eine Komponente einer Ladeaufnahmeanordnung auszuwählen ist aus der Gruppe hintere Gehäusewand, Kabelverteiler (Pin Holder), Gehäusefront und Anschlussmaske.

**Verwendungen**

Gegenstand der vorliegenden Erfindung ist zudem die Verwendung der erfindungsgemäßen Zusammensetzungen zur Herstellung von Erzeugnissen der Elektro- oder Elektronikindustrie, vorzugsweise Ladekomponenten, insbesondere von Ladekomponenten für die Elektromobilität. Bevorzugte Ladekomponenten sind Batterieladekomponenten zum Aufladen elektrischer Batterien, vorzugsweise Batterien für die Elektromobilität, besonders bevorzugt Ladekabelstecker oder Ladeaufnahmeanordnung (Charging Inlet), insbesondere Ladeaufnahmeanordnung oder Komponenten einer Ladeaufnahmeanordung. Erfindungsgemäß bevorzugte Ladeaufnahmeanordnungen auf Basis erfindungsgemäßer Zusammensetzungen bzw. Formmassen enthalten wenigstens eine hintere Gehäusewand , die AC/DC-Kabel, einen Kabelverteiler (Pin Holder), die Gehäusefront und eine Anschlussmaske. In der Anschlussmaske sind die Stromkontakte (Pins) so positioniert, dass sie die Kontakte des Ladesteckers präzise aufnehmen können. Insbesondere bevorzugt ist die Verwendung der erfindungsgemäßen Zusammensetzungen oder Formmassen zur Herstellung erfindungsgemäßer Pin Holder oder Kabelverteiler aus einem Stück auf Basis erfindungsgemäßer Zusammensetzungen bzw. Formmassen.

Bevorzugt ist die Verwendung von Zusammensetzungen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer,

zur Herstellung von Erzeugnissen der Elektro- oder Elektronikindustrie, vorzugsweise Ladekomponenten, insbesondere von Ladekomponenten für die Elektromobilität.

Besonders bevorzugt ist die Verwendung von Zusammensetzungen enthaltend auf 100 Massenanteile Polyamid 6

20 bis 300 Massenteile, bevorzugt 35 bis 250 Massenteile, besonders bevorzugt 50 bis 180 Massenteile und ganz besonders bevorzugt 70 bis 120 Massenteile Aluminiumoxid,

20 bis 350 Massenteile, bevorzugt 50 bis 300 Massenteile, besonders bevorzugt 85 bis 250 Massenteile und ganz besonders bevorzugt 120 bis 210 Massenteile Magnesiumhydroxid sowie

0,1 bis 25 Massenteile, bevorzugt 1 bis 16 Massenteile, besonders bevorzugt 2 bis 10 Massenteile 2,2-Bis(4-hydroxyphenyl)propane-epichlorohydrin-copolymer,

zur Herstellung von Ladeaufnahmeanordnungen oder wenigstens einer Komponente einer Ladeaufnahmeanordnung aus der Gruppe hintere Gehäusewand, Kabelverteiler (Pin Holder), Gehäusefront und Anschlussmaske.

Die nachfolgenden Beispiele dienen der Erläuterung der Erfindung, ohne dabei limitierend zu wirken.

**Beispiele:**

Die in Tab. 1 aufgeführten Komponenten wurden in einem Zweiwellenextruder des Typs ZSK 26 Compounder der Firma Coperion Werner & Pfleiderer (Stuttgart, Deutschland) bei einer Temperatur von ca. 290 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.

Anschließend wurde das Granulat auf einer Spritzgieß-Maschine vom Typ Arburg A470 bei Massetemperaturen zwischen 280 und 300°C und Werkzeugtemperaturen im Bereich von 80 bis 100°C zu Prüfkörpern der Größe 125 mm • 13mm • 0,75mm für die Prüfungen nach UL94, Prüfkörper der Größe 60 mm • 45mm • 2,0 mm für die Herstellung der Probekörper für die Wärmeleitfähigkeitsmessung und Prüfkörper der Größe 80 mm • 10 mm • 4 mm für die mechanischen Prüfungen verarbeitet.

Die Flammwidrigkeit wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Biegefestigkeit und die Randfaserdehnung erhielt man aus Biegeversuchen gemäß ISO178-A an Prüfkörpern der Abmessung 80 mm • 10 mm • 4 mm.

Die Schlagzähigkeit erhielt man nach IZOD gemäß ISO180-1U an Prüfkörpern der Abmessung 80 mm • 10 mm • 4 mm.

Die Wärmeleitfähigkeit wurde nach dem Wärmepuls-Verfahren (Engl.: "Laserflash"-Verfahren) gemäß EN821-2 unter Verwendung eines Netzsch LFA447 Nanoflash® - Gerätes gemessen. Die Messung der Wärmeleitfähigkeit senkrecht zur Fließrichtung des Probekörpers ("trough plane") erfolgte dabei an Probekörpern der Abmessung 12,5 mm • 12,5 mm • 2 mm, wobei der Lichtpuls auf die Seite mit der Abmessung 12,5 mm • 12,5 mm auftritt. Die jeweiligen Probekörper wurden vorab aus einem Prüfkörper der Größe 60 mm • 45mm • 2,0 mm herausgefräst.

Die Messung der Wärmeleitfähigkeit in Fließrichtung des Probekörpers ("in plane") erfolgte an 6 dicht aneinandergereihten Probekörpern der Abmessung 12,5mm • 2 mm • 2 mm, welche jeweils aus einem Prüfkörper der Größe 60 mm • 45mm • 2,0 mm herausgefräst, dann 90° um die Längsachse gedreht und schließlich wieder so zusammengelegt wurden, dass der Lichtpuls wiederum auf eine resultierende Fläche von ca. 12mm • 12,5mm auftrat.

Als Maß für die Isotropie der Wärmeleitfähigkeit gilt der Quotient aus der Wärmeleitfähigkeit senkrecht zur Fließrichtung ("through plane") und der Wärmeleitfähigkeit in Fließrichtung ("in plane"). Dieser nimmt bei vollständig isotroper Wärmeleitfähigkeit einen Wert von 1 an.

**Verwendete Materialien:**

Komponente a/1: Polyamid 6 (Durethan® B24, Fa. Lanxess Deutschland GmbH, Köln, Deutschland)

Komponente b/1: Aluminiumoxid (Martoxid® TM4250, Martinswerk GmbH, Bergheim, Deutschland)

Komponente c/1: Magnesiumhydroxid (Magnifin® 5HIV, Martinswerk GmbH, Bergheim, Deutschland)

Komponente d/1): 2,2-Bis(4-hydroxyphenyl)propane-epichlorohydrin-copolymer [CAS-Nr. 25068-38-6] (Araldite® GT7071 der Firma Huntsman Advanced Materials, Everberg, Belgien)

Als Komponente e) wurden weitere für die Verwendung in Polyamiden gebräuchliche Additive wie Nukleierungsmittel (z.B. auf Basis von Talkum [CAS Nr. 14807-96-6]) und/oder Thermostabilisatoren wie 1,6-Bis[3-(3,5-di-tert-butyl-4-hydroxyphenyl) propionylamino]-hexan [CAS Nr. 23128-74-7] (Irganox® 1098, Fa. BASF, Ludwigshafen, Deutschland) und/oder Entformungsmittel wie Ethylen-bis-stearylamid [CAS Nr. 110-30-5] (Loxiol® EBS von Emery Oleochemicals GmbH, Düsseldorf, Deutschland) eingesetzt. Art und Menge der als Komponente e) eingesetzten weiteren Additive sind in Beispielen und Vergleichsbeispielen jeweils entsprechend.

Die in Tab. 1 dargestellten Zusammensetzungen wurden nach der oben beschriebenen Weise verarbeitet.

**Tab. 1:**

| Komponente | | Bsp. 1 | Vgl. 1 |
|---|---|---|---|
| a/1 | [Massenanteile] | 100 | 100 |
| b/1 | [Massenanteile] | 167 | 161 |
| c/1 | [Massenanteile] | 91 | 87 |
| d/1 | [Massenanteile] | 3,6 | |
| e | [Massenanteile] | 1,5 | 1,4 |
| UL94 (0,75mm) | Klasse | V-0 | V-2 |
| IZOD Schlagzähigkeit | [kJ/m$^2$] | 30 | 27 |
| Wärmeleitfähigkeit ["through plane"] | [W/mK] | 1,2 | 1,3 |
| Wärmeleitfähigkeit ["in plane"] | [W/mK] | 1,7 | 1,6 |
| Isotropie der Wärmeleitfähigkeit | | 0,7 | 0,8 |
| Biegefestigkeit | [MPa] | > 160 | > 160 |
| Randfaserdehnung | [%] | > 1,7 | > 1,7 |

Tab. 1 zeigt, dass zwar sowohl für Bsp. 1 als auch für Vgl. 1 die gemäß Aufgabenstellung erforderliche mechanische Performance mit einer Randfaserdehnung oberhalb von 1,5% und einer Biegefestigkeit oberhalb von 150MPa sowie eine Wärmeleitfähigkeit von mindestens 1 W/mK mit hinreichender Isotropie vorlag, dass aber nur im Falle der erfindungsgemäßen Zusammensetzung in Bsp. 1 auch die geforderte Brandklassifizierung von UL94 V-0 bei einer Wandstärke von 0,75mm erzielt wurde. Des Weiteren zeigten die Proben auf Basis einer Zusammensetzung gemäß Beispiel 1 signifikante Vorteile in der Schlagzähigkeit.

**Patentansprüche**

1. Zusammensetzungen oder Formmassen enthaltend

a) wenigstens ein Polyamid,
b) Aluminiumoxid,
c) Magnesiumhydroxid und
d) wenigstens eine organische, halogenfreie, epoxidierte Verbindung, wobei
es sich bei dem Epoxid um ein oligomeres Reaktionsprodukt aus Bisphenol A mit Epichlorhydrin mit einem Epoxy Index nach ISO 3001 im Bereich von 450 bis 750 Gramm pro Äquivalent handelt,
oder wobei
es sich bei dem Epoxid um organische, halogenfreie Epoxid-Verbindungen mit mindestens 2 Epoxid-Funktionen handelt in denen in beliebiger Kombination und Häufigkeit neben dieser nachfolgend gezeigten Epoxid-enthaltenden Einheit

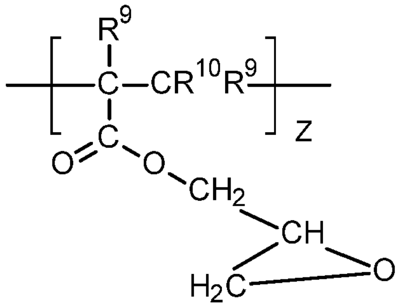

auch diese nachfolgend gezeigte Einheit

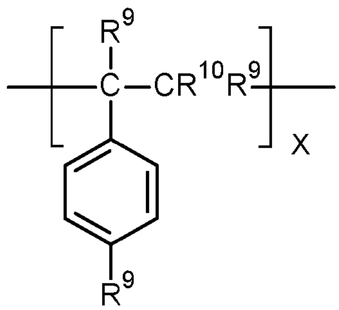

und/oder diese nachfolgend gezeigte Einheit

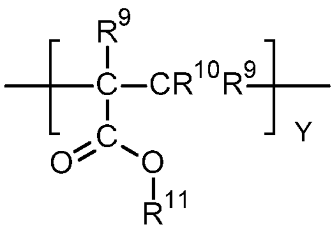

enthalten sind und worin
$R^9$, $R^{10}$ unabhängig voneinander für H oder $C_{1-}C_8$-Alkyl stehen,
$R^{11}$ für $C_1$-$C_8$ -Alkyl steht,
X und Y jeweils für ganze Zahlen im Bereich von 0 bis 20 stehen,
mit der Maßgabe, dass entweder X oder Y mindestens einmal ≥1 ist,
Z für eine ganze Zahl im Bereich von 2 bis 20 steht und
R* für H oder $C_1$-$C_8$-Alkyl steht,
wobei die mit X, Y, Z- gekennzeichneten Einheiten wiederholt und in beliebiger Reihenfolge auftreten können,

oder wobei
es sich bei dem Epoxid um eine Verbindung der Formel (II) handelt

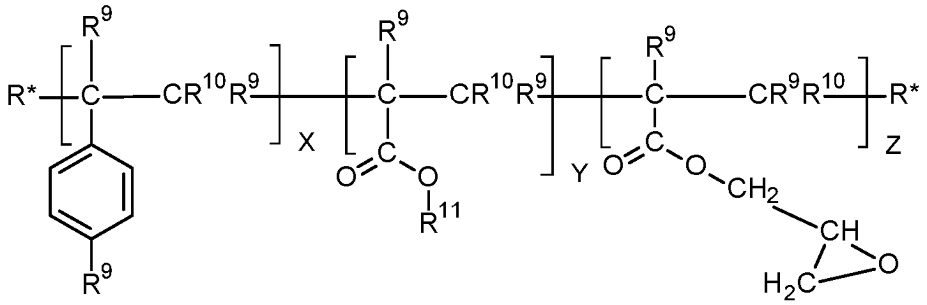

(II)

worin $R^9$, $R^{10}$ unabhängig voneinander für H oder $C_1$-$C_8$-Alkyl stehen,
$R^{11}$ für $C_1$-$C_8$ -Alkyl steht,
X und Y jeweils für ganze Zahlen im Bereich von 0 bis 20 stehen,
mit der Maßgabe, dass entweder X oder Y mindestens einmal ≥1 ist,
Z für eine ganze Zahl im Bereich von 2 bis 20 steht und
R* für H oder $C_1$-$C_8$-Alkyl steht, wobei die mit X, Y, Z- gekennzeichneten Einheiten wiederholt und in beliebiger Reihenfolge auftreten können,
oder wobei
es sich bei dem Epoxid um ein oligomeres Reaktionsprodukt aus Bisphenol A mit Epichlorhydrin der Formel (III),

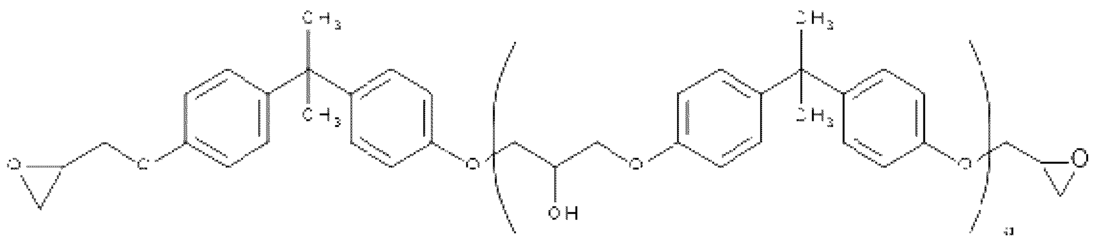

(III)

handelt,
worin a für eine ganze Zahl im Bereich von 0 bis 12 steht, wobei a für die durchschnittliche Anzahl an Wiederholungseinheiten steht.

2. Zusammensetzungen oder Formmassen gemäß Anspruch 1, **dadurch gekennzeichnet, dass** auf 100 Massenanteile der Komponente a) die Komponente b) in Mengen im Bereich von 20 bis 300 Massenteilen, bevorzugt im Bereich von 35 bis 250 Massenteilen, besonders bevorzugt im Bereich von 50 bis 180 Massenteilen und ganz besonders bevorzugt im Bereich von 70 bis 120 Massenteilen eingesetzt wird.

3. Zusammensetzungen oder Formmassen gemäß Anspruch 1 oder 2, **dadurch gekennzeichnet, dass** auf 100 Massenanteile der Komponente a) die Komponente c) in Mengen im Bereich von 20 bis 350 Massenteilen, bevorzugt im Bereich von 50 bis 300 Massenteilen, besonders bevorzugt im Bereich von 85 bis 250 Massenteile und ganz besonders bevorzugt im Bereich von 120 bis 210 Massenteilen eingesetzt wird.

4. Zusammensetzungen oder Formmassen gemäß einem oder mehreren der Ansprüche 1 bis 3, **dadurch gekennzeichnet, dass** auf 100 Massenanteile der Komponente a) die Komponente d) in Mengen im Bereich von 0,1 bis 25 Massenteilen, bevorzugt im Bereich von 1 bis 16 Massenteilen, besonders bevorzugt im Bereich von 2 bis 10 Massenteilen eingesetzt.

5. Zusammensetzungen oder Formmassen gemäß einem oder mehreren der Ansprüche 1 bis 4, **dadurch gekennzeichnet, dass** Komponente d) zwei Epoxid-Gruppen pro Molekül aufweist, wobei vorzugsweise wenigstens eine Epoxid-Gruppe endständig ist.

6. Zusammensetzungen oder Formmassen gemäß Anspruch 5, **dadurch gekennzeichnet, dass** es sich bei Komponente d) um Polyglycidylether oder um Poly-(beta-methylglycidyl)-ether handelt.

7. Zusammensetzungen oder Formmassen gemäß einem oder mehreren der Ansprüche 1 bis 6, **dadurch gekennzeichnet, dass** als Komponente a) semikristalline Polyamide eingesetzt werden, die eine Schmelzenthalpie im Bereich von 4 bis 25 J/g, gemessen mit der DSC-Methode gemäß ISO 11357 beim 2. Aufheizen und Integration des Schmelzpeaks, aufweisen, vorzugsweise Polyamid 6 oder Polyamid 66 oder ein Copolyamid von Polyamid 6 oder Polyamid 66.

8. Erzeugnisse der Elektro- oder Elektronikindustrie, vorzugsweise Ladekomponenten, insbesondere von Ladekomponenten für die Elektromobilität, basierend auf Zusammensetzungen oder Formmassen gemäß einem oder mehreren der Ansprüche 1 bis 6.

9. Ladekomponenten gemäß Anspruch 8, **dadurch gekennzeichnet, dass** es sich um Batterieladekomponenten zum Aufladen elektrischer Batterien, vorzugsweise Batterien für die Elektromobilität, besonders bevorzugt um Ladekabelstecker oder um eine Ladeaufnahmeanordnung, insbesondere um eine Ladeaufnahmeanordnung oder Komponenten einer Ladeaufnahmeanordung handelt.

10. Komponenten einer Ladeaufnahmeanordnung gemäß Anspruch 9, **dadurch gekennzeichnet, dass** es sich dabei um eine hintere Gehäusewand, um einen Kabelverteiler, um eine Gehäusefront oder um eine Anschlussmaske handelt, vorzugsweise um einen Kabelverteiler.

11. Verfahren zur Herstellung von Ladekomponenten, **dadurch gekennzeichnet, dass** man Zusammensetzungen gemäß einem der Ansprüche 1 bis 6,
durch Mischen zu Formmassen verarbeitet, als Strang in einem Wasserbad austrägt, bis zur Granulierfähigkeit abkühlt und granuliert und im Spritzgussverfahren einsetzt.

12. Verwendung der Zusammensetzungen oder Formmassen gemäß einem oder mehreren der Ansprüche 1 bis 7 zur Herstellung von Erzeugnissen der Elektro- oder Elektronikindustrie, vorzugsweise zur Herstellung von Ladekomponenten, insbesondere zur Herstellung von Ladekomponenten für die Elektromobilität.

13. Verwendung gemäß Anspruch 12, **dadurch gekennzeichnet, dass** es sich bei den Ladekomponenten um Batterieladekomponenten zum Aufladen elektrischer Batterien, vorzugsweise um Ladekabelstecker oder um eine Ladeaufnahmeanordnung, insbesondere um eine Ladeaufnahmeanordnung oder Komponenten einer Ladeaufnahmeanordung handelt.

## Claims

1. Compositions or moulding materials containing

   a) at least one polyamide,
   b) aluminium oxide,
   c) magnesium hydroxide and
   d) at least one organic, halogen-free, epoxidized compound, wherein
   the epoxide is an oligomeric reaction product of bisphenol A with epichlorohydrin having an epoxy index according to ISO 3001 in the range from 450 to 750 grams per equivalent,
   or wherein
   the epoxide is selected from organic, halogen-free epoxy compounds having at least 2 epoxy functions and containing in any desired combination and frequency not only the epoxy-containing unit

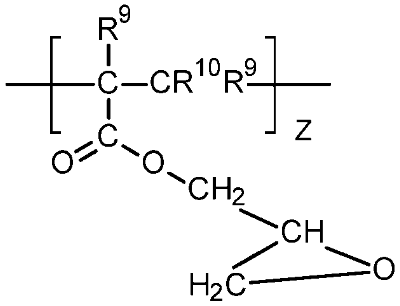

but also the unit

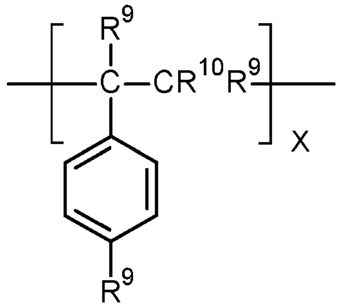

and/or the unit

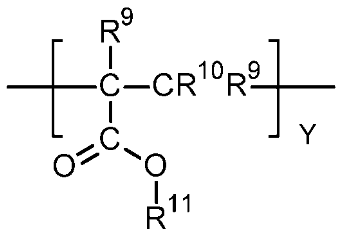

and wherein
$R^9$, $R^{10}$ independently of one another represent H or $C_1$-$C_8$-alkyl,
$R^{11}$ represents $C_1$-$C_8$-alkyl,
X and Y each represent integers in the range from 0 to 20,
with the proviso that either X or Y is ≥ 1 at least once,
Z represents an integer in the range from 2 to 20 and
R* represents H or $C_1$-$C_8$-alkyl,
wherein the units designated X, Y, Z may occur repeatedly and in any desired sequence,
or wherein
the epoxide is a compound of formula (II)

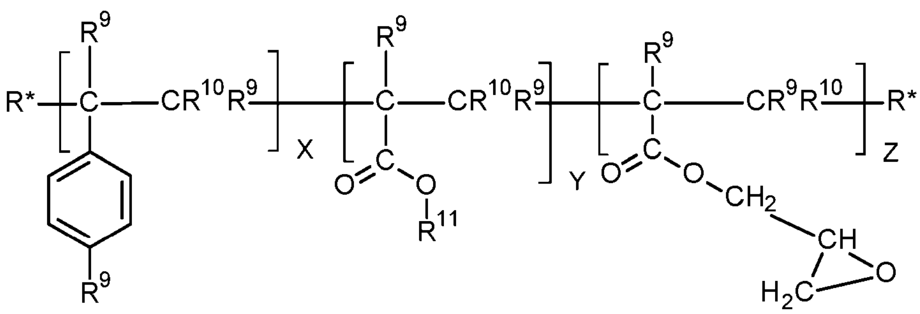

(II)

wherein $R^9$, $R^{10}$ independently of one another represent H or $C_1$-$C_8$-alkyl,
$R^{11}$ represents $C_1$-$C_8$-alkyl,
X and Y each represent integers in the range from 0 to 20,
with the proviso that either X or Y is ≥ 1 at least once,
Z represents an integer in the range from 2 to 20 and
R* represents H or $C_1$-$C_8$-alkyl, wherein the units designated X, Y, Z may occur repeatedly and in any desired sequence,
or wherein
the epoxide is an oligomeric reaction product of bisphenol A with epichlorohydrin of formula (III)

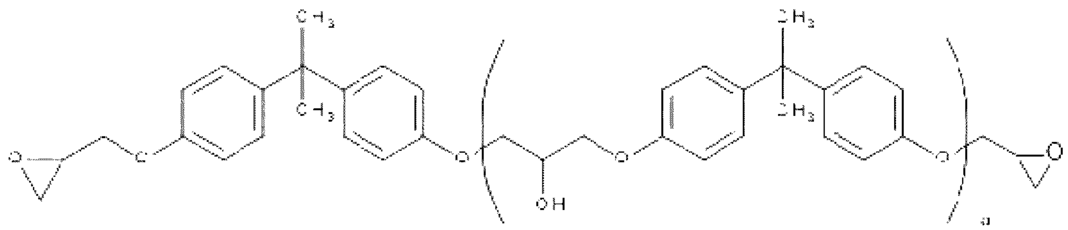

(III),

wherein a represents an integer in the range from 0 to 12, wherein a represents the average number of repeating units.

2. Compositions or moulding materials according to Claim 1, **characterized in that** per 100 parts by mass of the component a) the component b) is employed in amounts in the range from 20 to 300 parts by mass, preferably in the range from 35 to 250 parts by mass, particularly preferably in the range from 50 to 180 parts by mass and very particularly preferably in the range from 70 to 120 parts by mass.

3. Compositions or moulding materials according to Claim 1 or 2, **characterized in that** per 100 parts by mass of the component a) the component c) is employed in amounts in the range from 20 to 350 parts by mass, preferably in the range from 50 to 300 parts by mass, particularly preferably in the range from 85 to 250 parts by mass and very particularly preferably in the range from 120 to 210 parts by mass.

4. Compositions or moulding materials according to one or more of Claims 1 to 3, **characterized in that** per 100 parts by mass of the component a) the component d) is employed in amounts in the range from 0.1 to 25 parts by mass, preferably in the range from 1 to 16 parts by mass, particularly preferably in the range from 2 to 10 parts by mass.

5. Compositions or moulding materials according to one or more of Claims 1 to 4, **characterized in that** component d) comprises two epoxy groups per molecule, wherein preferably at least one epoxy group is terminal.

6. Compositions or moulding materials according to Claim 5, **characterized in that** component d) is polyglycidyl ether or poly(beta-methylglycidyl) ether.

7. Compositions or moulding materials according to one or more of Claims 1 to 6, **characterized in that** the component a) employed is selected from semicrystalline polyamides which have a melting enthalpy in the range from 4 to 25 J/g measured by the DSC method according to ISO 11357 in the 2nd heating and integration of the melting peak, preferably polyamide 6 or polyamide 66 or a copolyamide of polyamide 6 or polyamide 66.

8. Articles of manufacture of the electricals or electronics industries, preferably charging components, in particular charging components for electromobility, based on compositions or moulding materials according to one or more of Claims 1 to 6.

9. Charging components according to Claim 8, **characterized in that** these are battery charging components for charging electrical batteries, preferably batteries for electromobility, particularly preferably charging cable plugs or a charging inlet, in particular a charging inlet or components of a charging inlet.

10. Components of a charging inlet according to Claim 9, **characterized in that** these are selected from a rear housing

wall, a pin holder, a housing front or a connection mask, preferably a pin holder.

**11.** Process for producing charging components, **characterized in that** compositions according to any of Claims 1 to 6, are processed into moulding materials by mixing, extruded in a water bath, cooled until pelletizable and pelletized and employed in an injection moulding process.

**12.** Use of the compositions or moulding materials according to one or more of Claims 1 to 7 for production of articles of manufacture of the electricals or electronics industries, preferably for production of charging components, in particular for production of charging components for electromobility.

**13.** Use according to Claim 12, **characterized in that** the charging components are battery charging components for charging electrical batteries, preferably charging cable plugs or a charging inlet, in particular a charging inlet or components of a charging inlet.

## Revendications

**1.** Compositions ou masses de moulage contenant

a) au moins un polyamide,
b) de l'oxyde d'aluminium,
c) de l'hydroxyde de magnésium et
d) au moins un composé organique époxydé exempt d'halogène, où
l'époxyde est un produit de réaction oligomère de bisphénol A avec l'épichlorhydrine ayant un indice époxy selon la norme ISO 3001 dans la plage de 450 et 750 grammes par équivalent,
ou où
l'époxyde consiste en des composés époxydes organiques exempts d'halogène ayant au moins 2 fonctions époxydes dans lesquels, dans toute combinaison et fréquence quelconques, outre cette unité contenant un époxyde représentée ci-après

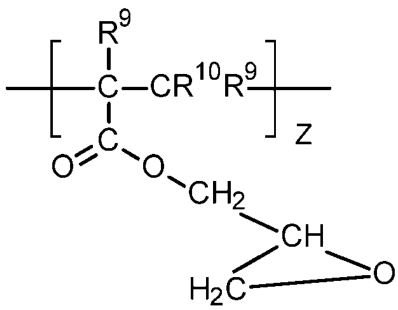

cette unité représentée ci-après

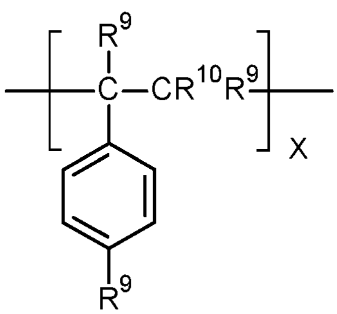

et/ou cette unité représentée ci-après

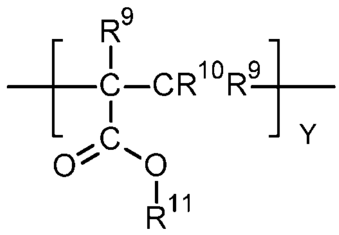

sont contenues et où
$R^9$, $R^{10}$ représentent indépendamment H ou alkyle en $C_1$-$C_8$,
$R^{11}$ représente alkyle en $C_1$-$C_8$,
X et Y représentent chacun des nombres entiers dans la plage de 0 à 20,
à condition que soit X soit Y soit au moins une fois ≥ 1,
Z représente un nombre entier dans la plage de 2 à 20 et
R* représente H ou alkyle en $C_1$-$C_8$,
les unités désignées par X, Y, Z pouvant être répétées et apparaître dans un ordre quelconque,
ou où
l'époxyde consiste en un composé de formule (II)

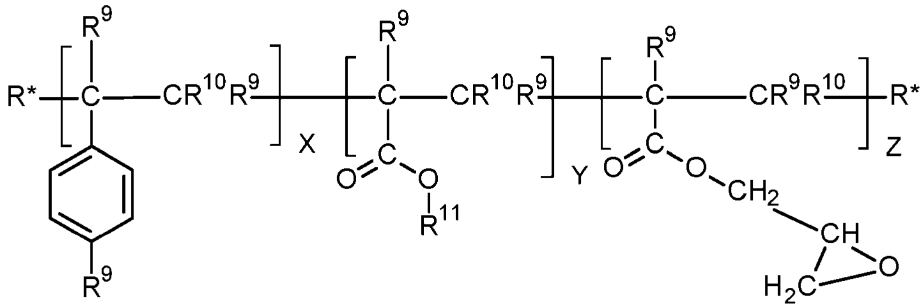

(II)

où $R^9$, $R^{10}$ représentent indépendamment l'un de l'autre H ou alkyle en $C_1$-$C_8$,
$R^{11}$ représente alkyle en $C_1$-$C_8$,
X et Y représentent chacun des nombres entiers dans la plage de 0 à 20,
à condition que soit X soit Y soit au moins une fois ≥ 1,
Z représente un nombre entier dans la plage de 2 à 20 et
R* représente H ou alkyle en $C_1$-$C_8$, les unités désignées par X, Y, Z pouvant être répétées et apparaître dans un ordre quelconque,
ou où
l'époxyde consiste en un produit de réaction oligomère de bisphénol A avec l'épichlorhydrine de formule (III)

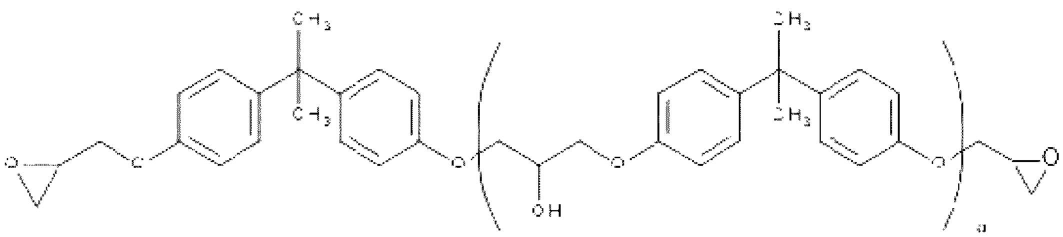

(III),

où a représente un nombre entier dans la plage de 0 à 12, a représentant le nombre moyen d'unités de répétition.

2. Compositions ou masses de moulage selon la revendication 1, **caractérisées en ce que**, pour 100 parties en masse du composant a), le composant b) est utilisé en quantités dans la plage de 20 à 300 parties en masse, de préférence

dans la plage de 35 à 250 parties en masse, de manière particulièrement préférée dans la plage de 50 à 180 parties en masse et de manière tout particulièrement préférée dans la plage de 70 à 120 parties en masse.

3. Compositions ou masses de moulage selon la revendication 1 ou 2, **caractérisées en ce que**, pour 100 parties en masse du composant a), le composant c) est utilisé en quantités dans la plage de 20 à 350 parties en masse, de préférence dans la plage de 50 à 300 parties en masse, de manière particulièrement préférée dans la plage de 85 à 250 parties en masse et de manière tout particulièrement préférée dans la plage de 120 à 210 parties en masse.

4. Compositions ou masses de moulage selon une ou plusieurs des revendications 1 à 3, **caractérisées en ce que**, pour 100 parties en masse du composant a), le composant d) est utilisé en quantités dans la plage de 0,1 à 25 parties en masse, de préférence dans la plage de 1 à 16 parties en masse, de manière particulièrement préférée dans la plage de 2 à 10 parties en masse.

5. Compositions ou masses de moulage selon une ou plusieurs des revendications 1 à 4, **caractérisées en ce que** le composant d) présente deux groupes époxy par molécule, au moins un groupe époxy étant de préférence terminal.

6. Compositions ou masses de moulage selon la revendication 5, **caractérisées en ce que** le composant d) est un éther polyglycidylique ou un éther poly-(bêta-méthylglycidylique).

7. Compositions ou masses de moulage selon une ou plusieurs des revendications 1 à 6, **caractérisées en ce que**, comme composant a), des polyamides semi-cristallins sont utilisés, qui présentent une enthalpie de fusion dans la plage de 4 à 25 J/g, mesurée par la méthode DSC selon la norme ISO 11357 lors du 2e chauffage et intégration du pic de fusion, de préférence du polyamide 6 ou du polyamide 66 ou un copolyamide de polyamide 6 ou polyamide 66.

8. Produits de l'industrie électrique ou électronique, de préférence composants de charge, en particulier composants de charge pour l'électromobilité, à base de compositions ou de masses de moulage selon une ou plusieurs des revendications 1 à 6.

9. Composants de charge selon la revendication 8, **caractérisés en ce qu'**il s'agit de composants de charge de batterie pour la recharge de batteries électriques, de préférence de batteries pour l'électromobilité, de manière particulièrement préférée de connecteurs de câbles de charge ou d'un agencement de réception de charge, en particulier d'un agencement de réception de charge ou de composants d'un agencement de réception de charge.

10. Composants d'un agencement de réception de charge selon la revendication 9, **caractérisés en ce qu'**il s'agit d'une paroi arrière de boîtier, d'un répartiteur de câble, d'une face avant de boîtier ou d'un masque de raccordement, de préférence d'un répartiteur de câble.

11. Procédé de fabrication de composants de charge, **caractérisé en ce que** des compositions selon l'une des revendications 1 à 6
sont transformées en masses de moulage par mélange, sont extrudées sous forme de brin dans un bain d'eau, sont refroidies jusqu'à être aptes à la granulation et sont granulées et utilisées dans un procédé de moulage par injection.

12. Utilisation des compositions ou des masses de moulage selon une ou plusieurs des revendications 1 à 7 pour la fabrication de produits de l'industrie électrique ou électronique, de préférence pour la fabrication de composants de charge, en particulier pour la fabrication de composants de charge pour l'électromobilité.

13. Utilisation selon la revendication 12, **caractérisée en ce que** les composants de charge sont des composants de charge de batterie pour la recharge de batteries électriques, de préférence des connecteurs de câbles de charge ou un agencement de réception de charge, en particulier un agencement de réception de charge ou des composants d'un agencement de réception de charge.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102012002882 B4
- DE 102020108175 A1
- EP 3470254 B1
- EP 3133104 A1
- CN 104559147 A
- CN 111518367 A
- WO 2014036720 A1
- DE 102011084519 A1
- EP 3670589 A1
- EP 3164694 A1
- DE 19802141 C1
- EP 1972921 A1
- DE 102009056503 A1
- DE 102004056520 A1
- DE 4313688 A1
- DE 4119240 C2
- DD 278859 A1
- DD 260764 A1
- DD 232760 A1
- DE 19628348 C1
- DE 69406683 T2
- DE 10218413 B4
- DE 4129105 A1
- US 7547743 B2
- US 20020128428 A1
- DE 10316615 A1
- DE 2035390 A
- DE 2248242 A
- US 4937285 A
- DE 3704657 A
- DE 3704655 A
- DE 3631540 A
- DE 3631539 A
- EP 728811 A
- DE 1961668 A
- WO 9740092 A


### In der Beschreibung aufgeführte Nicht-Patentliteratur


- **H. DOMININGHAUS**. Die Kunststoffe und ihre Eigenschaften. VDI-Verlag, 1976, 272
- *CHEMICAL ABSTRACTS*, 919-30-2
- *CHEMICAL ABSTRACTS*, 13822-56-5
- *CHEMICAL ABSTRACTS*, 1760-24-3
- *CHEMICAL ABSTRACTS*, 5089-72-5
- *CHEMICAL ABSTRACTS*, 3068-78-8
- *CHEMICAL ABSTRACTS*, 15180-47-9
- *CHEMICAL ABSTRACTS*, 1344-28-1
- *CHEMICAL ABSTRACTS*, 1309-42-8
- Chemie Ingenieur Technik. Wiley-VCH Verlags GmbH, 2000, vol. 72, 273-276
- Dispersing Powders in Liquid for Particle Size Analysis. Horiba Instruments Inc, 2013
- **SMITH** ; **MARCH**. March's Advanced Organic Chemistry. Wiley-Interscience, 2001, vol. 5
- *CHEMICAL ABSTRACTS*, 8013-07-8
- *CHEMICAL ABSTRACTS*, 25068-38-6
- *CHEMICAL ABSTRACTS*, 68604-44-4
- *CHEMICAL ABSTRACTS*, 85116-93-4
- *CHEMICAL ABSTRACTS*, 110-30-5
- *CHEMICAL ABSTRACTS*, 74388-22-0
- *CHEMICAL ABSTRACTS*, 13463-67-7
- **C.M. KECK**. Moderne Pharmazeutische Technologie. Freie Universität, 2009
- *QUANTACHROME PARTIKELWELT NO*, 06 June 2007, 1-16
- Ullmann, Enzyklopädie der Technischen Chemie. 1980, vol. 19, 277-290
- *CHEMICAL ABSTRACTS*, 68664-06-2
- *CHEMICAL ABSTRACTS*, 1184-10-7
- *CHEMICAL ABSTRACTS*, 1203646-63-2
- *CHEMICAL ABSTRACTS*, 1078142-02-5
- *CHEMICAL ABSTRACTS*, 25134-01-4
- *CHEMICAL ABSTRACTS*, 1427364-85-9
- *CHEMICAL ABSTRACTS*, 639808-21-2
- *CHEMICAL ABSTRACTS*, 35074-77-2
- *CHEMICAL ABSTRACTS*, 6683-19-8
- *CHEMICAL ABSTRACTS*, 90498-90-1
- *CHEMICAL ABSTRACTS*, 23128-74-7
- *CHEMICAL ABSTRACTS*, 154862-43-8
- *CHEMICAL ABSTRACTS*, 38613-77-3
- **M. SCHOßIG**. Schädigungsmechanismen in faserverstärkten Kunststoffen. Vieweg und Teubner Verlag, 2011, vol. 1, 35
- *CHEMICAL ABSTRACTS*, 65997-17-3
- **J.KASTNER et al.** Quantitative Messung von Faserlängen und -verteilung in faserverstärkten Kunststoffteilen mittels μ-Röntgen-Computertomographie. *DGZfP-Jahrestagung*, 2007

- Test for Flammability of Plastic Materials for Parts in Devices and Appliances. Northbrook. Underwriters Laboratories Inc, 1998, 14-18
- *CHEMICAL ABSTRACTS*, 14807-96-6